# EUROPEAN PATENT SPECIFICATION

(11) **EP 4 102 784 B1**
(45) Date of publication and mention of the grant of the patent: **21.05.2025**
(21) Application number: 20923270.1
(22) Date of filing: 30.12.2020
(51) Int. Cl.: H04L 45/02, H04L 45/0377, H04L 45/302, H04L 45/745

(54) **DATA STREAM PROCESSING METHOD AND DEVICE**
DATENSTROMVERARBEITUNGSVERFAHREN UND -VORRICHTUNG
PROCÉDÉ ET DISPOSITIF DE TRAITEMENT DE FLUX DE DONNÉES

(30) Priority: 05.03.2020 CN 202010148537
(43) Date of publication of application: 14.12.2022
(73) Proprietor: Huawei Technologies Co., Ltd., Shenzhen, Guangdong 518129, (CN)
(72) Inventor: WANG, Fang, Shenzhen, Guangdong 518129 (CN); ZHANG, Xudong, Shenzhen, Guangdong 518129 (CN); ZHANG, Peng, Shenzhen, Guangdong 518129 (CN)
(74) Representative: Maiwald GmbH
(86) International application number: PCT/CN2020/141750
(87) International publication number: WO 2021/174986

(56) References cited:
- WO-A1-2014/205660
- WO-A1-2016/150020
- CN-A- 102 571 613
- CN-A- 103 916 719
- US-A1- 2017 244 631
- US-A1- 2018 054 384
- US-A1- 2018 310 287

## Description

### TECHNICAL FIELD

This application relates to the internet protocol (internet protocol, IP) field, and in particular, relates to a data stream processing method and apparatus.

### BACKGROUND

In an uplink packet processing process of a data stream, there are usually some special stateful service functions (Service Functions, SFs), such as network address translation (Network Address Translation, NAT) and a firewall (Firewall). To successfully complete the uplink packet processing of the data stream, for example, address translation or validity check, status information of a user is created and stored. However, to reduce communication and storage overheads in a system and improve processing performance, only the status information is locally stored in a resource module that executes the processing. Therefore, a service function forwarder (service function forwarder, SFF) can obtain the status information only by sending uplink and downlink packets of a same data stream to a same resource module of an SF for processing, to successfully perform address translation or validity check.

Currently, with development and maturity of virtualization and cloud-native technologies, a service function connected through a service function chain gradually evolves from a physical network function (physical network function, PNF) to a virtualized network function (virtualized network function, VNF) or a cloud-native network function (cloud-native network function, CNF), so that a resource module of the SF is more flexibly migrated or scaled in or out upon service changes.

However, because the resource module of the SF may be scaled in or out upon the service changes, a corresponding resource module of the SF may change in uplink transmission and downlink transmission processes. Moreover, currently, because the resource module of the SF changes in the uplink and downlink transmission processes, uplink and downlink packets of a same data stream cannot be effectively ensured to be sent to a same resource module of the SF for processing, leading to a high communication transmission failure rate.

US2017/0244631 A1 describes SR APP-segment integration with service function chaining header metadata.

### SUMMARY

This application provides a data stream processing method and apparatus, to improve a success rate of communication transmission.

The present invention is defined by the subject-matter of the independent claims. Additional features of the invention are presented in the dependent claims.

### BRIEF DESCRIPTION OF DRAWINGS

FIG. 1 is a schematic diagram in which an SFF sends uplink and downlink packets to a same resource module of an SF for processing according to this application;
FIG. 2 is a schematic diagram of a data stream transmission scenario according to this application;
FIG. 3A and FIG. 3B are a schematic diagram of a data stream processing method according to this application;
FIG. 4 is a schematic diagram of a first type of uplink data packet processing according to this application;
FIG. 5 is a schematic diagram of a first type of downlink data packet processing according to this application;
FIG. 6A to FIG. 6D are a schematic flowchart of a first type of data stream processing according to this application;
FIG. 7 is a schematic diagram of a second type of uplink data packet processing according to this application;
FIG. 8 is a schematic diagram of a second type of downlink data packet processing according to this application;
FIG. 9A to FIG. 9F are a schematic flowchart of a second type of data stream processing according to this application;
FIG. 10 is a schematic diagram of a first type of a data stream processing apparatus according to this application;
FIG. 11 is a schematic diagram of a second type of a data stream processing apparatus according to this application;
FIG. 12 is a schematic diagram of a third type of a data stream processing apparatus according to this application; and
FIG. 13 is a schematic diagram of a fourth type of a data stream processing apparatus according to this application.

### DESCRIPTION OF EMBODIMENTS

When processing a data stream, an anycast (anycast) service (service) SID is assigned to an SF, the service SID is advertised using a dynamic routing protocol, and a load balancing entry is generated dynamically by a forwarder on a service function chain, to implement dynamic load balancing of the data stream among a plurality of resource modules. For some special stateful SFs, such as NAT and a firewall, status information of a user is created and stored in an uplink packet processing process of a data stream, to process, such as perform address translation or validity check on, a downlink packet of the data stream. However, to reduce communication and storage overheads in a system and improve processing performance, the status data is locally stored only in a resource module that executes the processing. Therefore, an SFF is required to send uplink and downlink packets of a same data stream to a same resource module of the SF for processing.

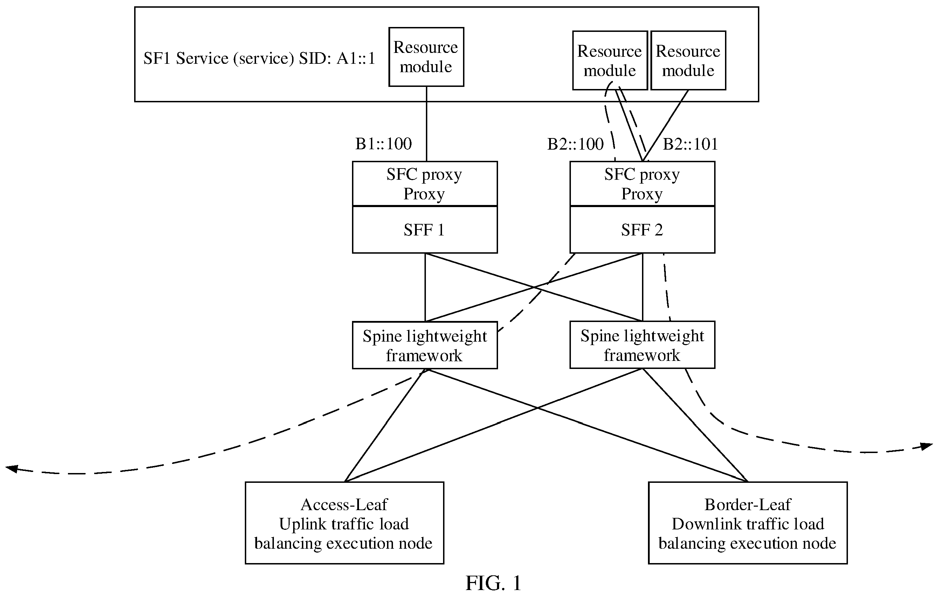

For example, as shown in FIG. 1, when an Access-Leaf node performs load balancing, a resource module 2 is selected to process an uplink data packet; and when a Border-Leaf node performs load balancing, the resource module 2 also needs to be selected to process a downlink data packet.

Further, currently, with development and maturity of virtualization and cloud-native technologies, service functions connected through a service function chain gradually evolve from a PNF to a VNF or a cloud-native network function CNF, so that a resource module of an SF may be scaled in or out upon service changes.

However, as the resource module of the SF may be scaled in or out flexibly upon the service changes, uplink and downlink packets of a same data stream cannot be effectively ensured to be sent to a same resource module of the SF for processing, leading to a high communication transmission failure rate.

To solve this problem, embodiments of this application provide a data stream processing method. The method may be applied to any data stream sending scenario. A basic idea of embodiments of this application is to record, in an uplink forwarding process of a data stream, information about a resource module that performs processing, and send the recorded information about the resource module together with the data stream. In this way, in a downlink forwarding process of the data stream, based on the information about the resource module carried in the data stream, a same resource module may be determined for forwarding.

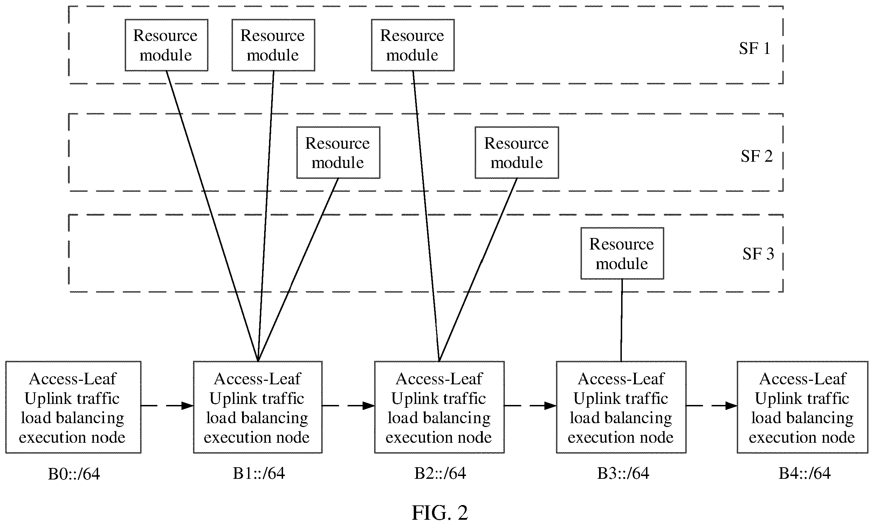

FIG. 2 is a schematic diagram of a data stream transmission scenario according to this application. It is assumed that a service function chain for data transmission includes an Access-Leaf, an SFF 1, an SFF 2, an SFF 3, and a Border-Leaf, and SRv6 locators of the Access-Leaf, the SFF 1, the SFF 2, the SFF 3, and the Border-Leaf are respectively B0::/64, B1::/64, B2::/64, B3::/64, and B4::/64. An SF 1, an SF 2, and an SF 3 include three resource modules, two resource modules, and one resource module respectively. A head-end (head-end) and a tail-end (tail-end) of an uplink data stream service function chain are respectively the Access-Leaf and the Border-Leaf. A head-end and a tail-end of a downlink data stream service function chain are respectively the Border-Leaf and the Access-Leaf. For ease of description, in embodiments of this application, nodes that transmit an uplink data stream packet on the service function chain are all referred to as a first node, and nodes that transmit a downlink data stream packet on the service function chain are all referred to as a second node. In embodiments of this application, the first node and the second node may be the same or different.

Embodiments of this application may be applied to an SRv6 service function chain scenario, and is applicable to a scenario in which an SF supports SRv6. For example, an SFF is not used as a service function chain (service function chain, SFC) proxy (proxy). Embodiments of this application are also applicable to a scenario in which an SF does not support SRv6. For example, an SFF is also used as an SFC proxy.

It should be noted that FIG. 2 in embodiments of this application is merely a simplified schematic diagram for ease of understanding. The described transmission scenario is intended to describe the technical solutions in embodiments of this application more clearly, and does not constitute a limitation on the technical solutions provided in embodiments of this application. A person of ordinary skill in the art may know that, with evolution of a network architecture and emergence of a new service scenario, the technical solutions provided in embodiments of this application are also applicable to similar technical problems.

The following describes related terms in embodiments of this application for ease of understanding.
(1) A data stream (data stream) is a data sequence of ordered bytes with a start point and an end point. The data stream includes an input stream and an output stream.
(2) SRv6 may be considered as a native (native) IPv6 technology in which new extension directly performed on an internet protocol (internet protocol, IP) extension header of internet protocol version 6 (internet protocol version 6, IPv6), where an extension part is referred to as a segment routing header (segment routing header, SRH), and the extension does not damage a standard IP header.
(3) Terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates a kind of "or" relationship between the associated objects. The term "at least one (one piece) of the following" or a similar expression thereof means any combination of these items, including any combination of a singular item (piece) or plural items (pieces). For example, at least one of a, b, or c may indicate: a, b, c, a and b, a and c, b and c, or a, b, and c, where a, b, and c may be singular or plural.

Unless otherwise status, ordinal numbers such as "first" and "second" mentioned in embodiments of this application are intended to distinguish a plurality of objects, rather than limit an order, a time sequence, priorities, or importance degrees of the plurality of objects. For example, a first priority criterion and a second priority criterion are merely used to distinguish between different criteria, but do not indicate different content, priorities, importance, or the like of the two criteria.

In addition, the terms "include/comprise" and "have" in embodiments, claims, and accompanying drawings of this application are not exclusive. For example, a process, a method, a system, a product, or a device including a series of steps or modules is not limited to the listed steps or modules, and may further include steps or modules that are not listed.

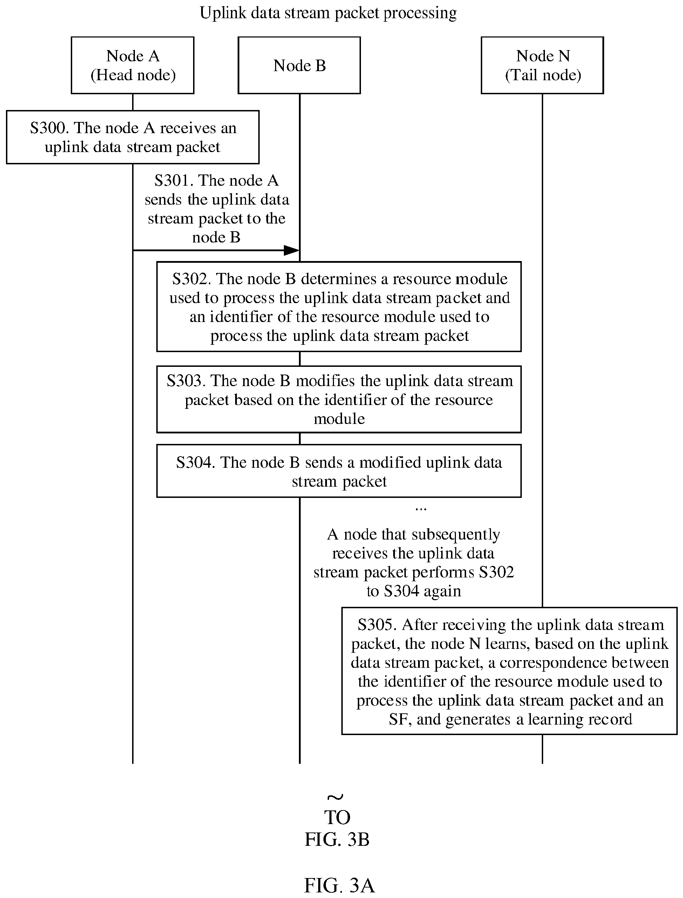

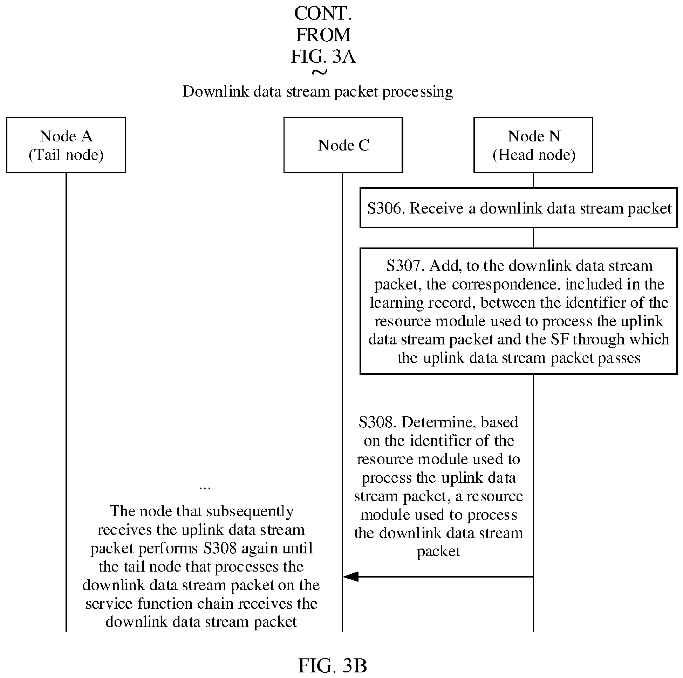

As shown in FIG. 3A and FIG. 3B, an embodiment of this application provides a data stream processing method. The method includes the following steps.

S300. A node A receives an uplink data stream packet.

It is assumed that the node A is a head node that is to process the uplink data stream packet. After receiving the uplink data stream packet, the node A obtains an SID-List based on a service function chain policy that is for uplink data stream packet processing.

In addition, S300 may further include: The head node receives a protocol packet, where the protocol packet carries a correspondence between a destination address and an SF.

S301. The node A sends the uplink data stream packet to a node B.

It is assumed that the node B is a node on a service function chain for transmitting the uplink data stream packet.

The node A may determine, based on the destination address in the SID-List, the node B that is to receive the uplink data stream packet, and then forward the uplink data stream packet to the node B.

S302. The node B determines a resource module used to process the uplink data stream packet and an identifier of the resource module used to process the uplink data stream packet.

In an optional implementation in this embodiment of this application, the node B searches for a forwarding entry based on the destination address, selects one entry from at least one entry corresponding to the forwarding entry, uses a resource module corresponding to the selected entry as the resource module for processing the uplink data stream packet, and records the identifier of the resource module in the forwarding entry.

Further, in this embodiment of this application, an entry may be selected, based on a keyword of the uplink data stream packet, from the at least one entry by using a Hash algorithm.

A person skilled in the art should understand that, in this embodiment of this application, the node B determines the forwarding entry based on the destination address in the SID-List may be understood as that the node B determines, based on the destination address in the SID-List, a corresponding SF, where the SF includes at least one resource module.

Further, after determining the at least one resource module based on the destination address, the node B selects a resource from the at least one resource module as the resource module for processing the uplink data stream packet, and records an identifier of the selected resource module.

For example, the node B determines, based on the destination address, that the SF corresponding to the destination address is an SF 1, and the SF 1 includes three resource modules, where identifiers of the three resource modules are respectively a resource module identifier 1, a resource module identifier 2, and a resource module identifier 3. Then, the node B selects one resource module from the three resource modules. For example, if the node B selects a resource module corresponding to the resource module identifier 3, the resource module corresponding to the resource module identifier 3 is used as the resource module for processing the uplink data stream packet. Finally, the node B records the identifier, that is, the resource module identifier 3, of the resource module used to process the uplink data stream packet.

It should be noted that when the head node (the node A) on the service function chain is an SFF, for a specific execution manner of the node A in S300, refer to the execution manner of the node B in S302. For brevity, details are not described herein.

S303. The node B modifies the uplink data stream packet based on the identifier of the resource module.

In an optional implementation in this embodiment of this application, after determining the resource module used to process the uplink data stream packet, for example, the identifier of the resource module used to process the uplink data stream packet and selected by the node B is the resource module identifier 3, the node B adds the identifier (the resource module identifier 3) of the resource module to the uplink data stream packet. Therefore, a modified uplink data packet includes the identifier of the resource module used to process the uplink data stream packet.

It should be noted that, in this embodiment of this application, the node B may modify, after determining the resource module used to process the uplink data stream packet and before processing the uplink data stream packet by using the resource module, the uplink data stream packet based on the identifier of the selected resource module; or the node B may modify, after determining the resource module used to process the uplink data stream packet and successfully performing local forwarding by using the resource module, the uplink data stream packet based on the identifier of the selected resource module. In other words, in this embodiment of this application, an occasion for modifying the uplink data stream packet based on the identifier of the selected resource module is not limited. Any modification manner and occasion applicable to this embodiment of this application shall fall within the protection scope of embodiments of this application.

In an optional implementation in this embodiment of this application, if the SF has a capability of modifying an SID in a segment list (segment list), the SF may modify the uplink data stream packet based on the identifier (for example, the resource module identifier 3) of the resource module. Alternatively, if the SF does not have the capability of modifying the SID in the segment list (segment list), the node B may modify the uplink data stream packet based on the identifier (for example, the resource module identifier 3) of the resource module.

S304. The node B sends the modified uplink data stream packet.

In an optional implementation in this embodiment of this application, the node B sends, based on the destination address in the SID-List, the modified uplink data stream packet to a next node corresponding to the service function chain.

Further, the node B determines, based on a data stream key and the SID-List, the next node to which the packet is to be sent.

A node that subsequently receives the uplink data stream packet performs S302 to S304 again until the service function chain completes the uplink data stream packet processing, that is, a tail node (for example, a node N) that is to process the uplink data stream packet on the service function chain receives the uplink data stream packet. Details are not described herein.

It should be noted that, in the uplink data stream packet processing process, a node for querying the destination address and selecting the resource module and a node for modifying the uplink data packet may be the same or different. This embodiment of this application is merely an example for description, and does not impose a limitation.

S305. After receiving the uplink data stream packet, the node N learns, based on the uplink data stream packet, the correspondence between the identifier of the resource module used to process the uplink data stream packet and the SF, and generates a learning record.

In this embodiment of this application, through the foregoing steps, the uplink data stream packet carries the correspondence between the identifier of the resource module used to process the uplink data stream packet and the SF through which the uplink data stream packet passes. Therefore, the node that receives the uplink data stream packet may obtain, through learning, content carried in the uplink data stream packet, and generate the corresponding learning record through learning.

In another optional implementation in this embodiment of this application, after receiving the uplink data stream packet, each node that is to process the uplink data stream packet may obtain and learn the correspondence, in the uplink data stream packet, between the identifier of the resource module used to process the uplink data stream packet and the SF through which the uplink data stream passes. Alternatively, after completing data stream processing, each node that is to process the uplink data stream packet may learn, based on the uplink data stream packet, the correspondence between the identifier of the resource module used to process the uplink data stream packet and the SF in a data stream transmission process.

It should be noted that when anode is not a tail node, the node may not need to learn the correspondence.

S306. The head node (for example, the node N) that is to process a downlink data stream packet receives the downlink data stream packet.

In the procedure shown in FIG. 3B in this embodiment of this application, it is assumed that a tail node that processes the uplink data stream packet is a head node that processes the downlink data stream packet, the head node that processes the downlink data stream packet is the node N.

In addition, in this embodiment of this application, after receiving the downlink data stream packet, the node N obtains the SID-List from the service function chain policy.

S307. The node N adds, to the downlink data stream packet, the correspondence, included in the learning record, between the identifier of the resource module used to process the uplink data stream packet and the SF through which the uplink data stream packet passes.

Specifically, after determining that the downlink data stream arrives, the head node that is to process the downlink data stream determines, based on a correspondence between the uplink data stream packet and the downlink data stream packet, the learning record corresponding to the downlink data stream packet, where the learning record includes the correspondence between the identifier of the resource module used to process the uplink data stream packet and the SF through which the uplink data stream passes; and modifies the downlink data stream packet based on the learning record.

For example, it is assumed that in a transmission process of the uplink data stream packet, there are three resource modules in the SF 1 used to transmit the uplink data stream packet, and identifiers of the three resource modules are a hash ID 1, a hash ID 2, and a hash ID 3 respectively. If a resource module with the identifier hash ID 2 in the SF 1 is selected to process the uplink data stream packet, a correspondence between the SF 1 and the resource module with the identifier hash ID 2 is recorded. After the downlink data stream arrives, the correspondence is learned, and the downlink data stream packet is modified. That is, using the resource module with the identifier hash ID 2 when the downlink data stream packet is processed via the SF 1 is recorded in the downlink data stream packet.

In an optional implementation in this embodiment of this application, a destination address of the downlink data stream packet is a source address of the uplink data stream packet, and a source address of the downlink data stream packet is the destination address of the uplink data stream packet; or a protocol of the uplink data stream packet is the same as a protocol of the downlink data stream packet.

In addition, in this embodiment of this application, a source port and a destination port of the uplink data stream packet may be opposite to or different from a source port and a destination port of the downlink data stream packet. This is not specifically limited in this embodiment of this application.

It should be noted that, in this embodiment of this application, the method in this application is still applicable to a case in which the destination address and the source address of the uplink data stream packet do not correspond to the source address and the destination address of the downlink data stream packet, and the method is also applicable to a case in which the protocol of the uplink data stream packet is different from the protocol of the downlink data stream packet. In addition, in this step, the node may learn, only when the node is the head node that transmits the downlink data stream packet, the correspondence and add the learned correspondence to the downlink data stream packet. Another node that transmits the downlink data stream packet and that is on the service function chain may directly use the packet to which the correspondence has been added, and does not need to learn the correspondence.

S308. The node N determines, based on the identifier of the resource module used to process the uplink data stream packet, a resource module used to process the downlink data stream packet.

In this embodiment of this application, the resource module used to process the downlink data stream packet is the same as the resource module used to process the uplink data stream packet.

Through learning the correspondence and modifying the downlink data stream packet by the node N in S307, the downlink data stream packet carries the identifier of the resource module used to process the uplink data stream packet corresponding to the downlink data stream packet.

It is assumed that the node N forwards, based on the destination address in the SID-list and the correspondence between the identifier of the resource module used to process the uplink data stream packet and the SF through which the uplink data stream packet passes, the downlink data stream packet to a corresponding node C, on the service function chain, that is to process the downlink data stream packet.

In an optional implementation in this embodiment of this application, the node, on the service function chain, that transmits the downlink data stream packet determines to select, from the at least one entry corresponding to the forwarding entry and based on the correspondence, carried in the downlink data stream packet, between the identifier of the resource module used to process the uplink data stream packet and the SF through which the uplink data stream packet passes, a resource module corresponding to which entry is used as the resource module for processing the downlink data stream packet.

A node that subsequently receives the downlink data stream packet performs this step again until the service function chain that processes the downlink data stream packet completes the downlink data stream packet processing. That is, a tail node that is to process the downlink data stream packet on the service function chain receives the downlink data stream packet.

It should be noted that, in an optional implementation in this embodiment of this application, during downlink data stream transmission, after determining that, in the current destination address, the resource module corresponding to the identifier of the resource module carried in the downlink data stream packet is faulty, the node may re-select a resource module from remaining resource modules corresponding to the destination address to process the downlink data stream packet. In an optional implementation in this embodiment of this application, the identifier of the resource module in this embodiment of this application may be represented by a hash ID, and the SID includes three parts: Locator (locator), Function (function), and Arguments (arguments). In this embodiment of this application, Arguments represents a hash ID of a resource module of the SF, and Arguments may further include a data stream, a service, or any other information required by Function.

For example, in this embodiment, if an SID with a format of Locator:Function: 1 is assigned to the SF, it indicates that a resource module with an identifier 1 in the SF is specified to perform the function. A value 0 of Arguments indicates that no resource module is specified to perform the function.

In a data transmission process, there may be a plurality of SFs, and each SF may have a plurality of resource modules. To effectively determine a resource module used for transmission, the identifier of the resource module may be further used to identify one resource module in an entire network, or the identifier of the resource module may be used to identify one resource module in the SF. The following separately provides descriptions based on different cases of the identifier.

Case 1 of the identifier: The identifier of the resource module is used to identify one resource module in the SF.

For example, based on the service function chain shown in FIG. 2, a hash ID is assigned to a resource module of an SF, and the assigned hash ID is unique in the SF. A service SID of the SF, an interface connected to the resource module of the SF, and the hash ID are configured on a connected SFF.

Each SFF advertises a service SID by using a dynamic routing protocol, and a protocol packet issued by the dynamic routing protocol carries a hash ID of a resource module of an SF. After learning the service SID of each SF, each SFF generates a forwarding entry for the service SID. Table 1 to Table 4 list some examples.

**Table 1 Example of service SID forwarding entries generated by the Access-Leaf**

| Prefix Prefix | Hash ID | Transit Node Transit node | Type Type |
|---|---|---|---|
| A1::1:0/120 | 1 | B1::1 | Network-to-network interface NNI |
| | 2 | B1::1 | NNI |
| | 3 | B2::1 | NNI |

**Table 2 Example of service SID forwarding entries generated by the SFF 1**

| Prefix Prefix | Hash ID | Transit Node Transit node | Type Type |
|---|---|---|---|
| A1::1:0/120 | 1 | - | User-network interface UNI |
| | 2 | - | UNI |
| | 3 | B2::1 | Network-to-network interface NNI |
| A1::2:0/120 | 1 | - | UNI |
| | 2 | B2::1 | NNI |

**Table 3 Example of service SID forwarding entries generated by the SFF 2**

| Prefix Prefix | Hash ID | Transit Node Transit node | Type Type |
|---|---|---|---|
| A1::2:0/120 | 1 | B1::1 | Network-to-network interface NNI |
| | 2 | - | User-network interface UNI |
| A1::3:0/120 | 1 | B3::1 | NNI |

**Table 4 Example of service SID forwarding entries generated by the SFF 3**

| Prefix Prefix | Hash ID | Transit Node Transit node | Type Type |
|---|---|---|---|
| A3::2:0/120 | 1 | - | User-network interface UNI |

Case 2 of the identifier: The identifier of the resource module is used to identify one resource module in the entire network.

For example, based on the service function chain shown in FIG. 2, a hash ID is assigned to a resource module of an SF, and each network node generates an ECMP forwarding entry for the service SID, including a local static entry and a remote dynamic entry. A corresponding hash ID is recorded in each entry. Some examples are shown in Table 5 and Table 6.

**Table 5 Example of service SID forwarding entries of each SF generated by the Access-Leaf**

| Prefix Prefix | Hash ID | SID-List List | Type Type |
|---|---|---|---|
| A1::1/128 | 1 | <B1::100> | Network-to-network interface NNI |
| | 2 | <B1::101> | NNI |
| | 4 | <B2::100> | NNI |

**Table 6 Example of service SID forwarding entries of each SF generated by the SFF 1**

| Prefix Prefix | Hash ID | SID-List List | Type List |
|---|---|---|---|
| A2::1/128 | 3 | <B1::102> | User-network interface UNI |
| | 5 | <B2::101> | Network-to-network interface NNI |

Further, in this embodiment of this application, after the resource module used to process the uplink data stream packet and the identifier of the resource module are determined, a correspondence between the identifier of the resource module and the SF is further determined. Therefore, the uplink data stream packet is modified based on the correspondence between a unique identifier and the SF.

In this embodiment of this application, in a process of modifying the uplink data stream packet based on the correspondence between the unique identifier and the SF, modification may be performed in the following manners:
For example, in this embodiment of this application, the correspondence is added to an SRH of the uplink data stream packet.

Further, this embodiment of this application provides a plurality of manners of adding the correspondence to the SRH, where the manners are not specifically limited to the following several manners.

Modification manner 1: The correspondence is added to an SID in a segment list in the SRH.

That is, the modification manner 1 is extending the dynamic routing protocol on a control plane.

For example, as shown in Table 7, a service SID sub-TLV and a service attribute (attribute) sub-sub-TLV are newly added.

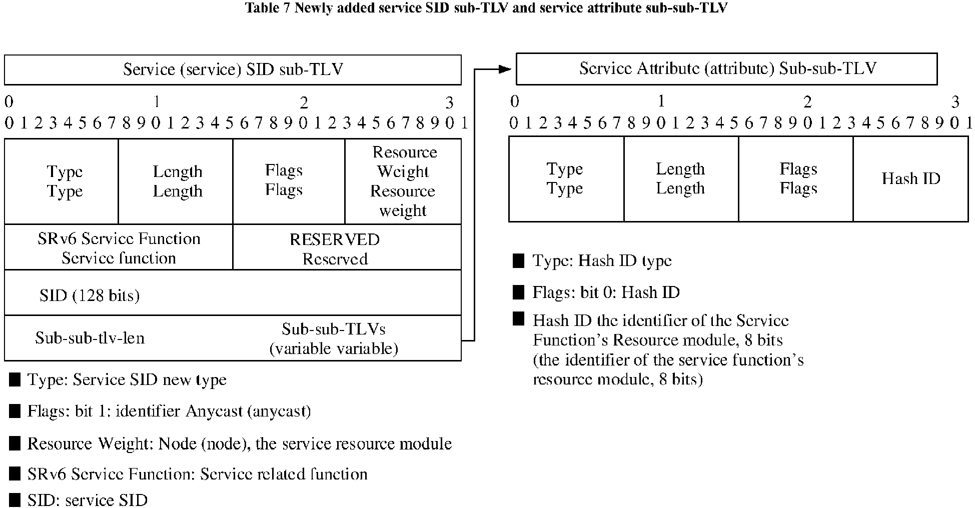

Modification manner 2: The correspondence is added to an optional TLV field in the SRH.

That is, the modification manner 2 is extending the dynamic routing protocol on the control plane and a data plane.

For example, as shown in Table 8, the modification on the control plane is as follows:

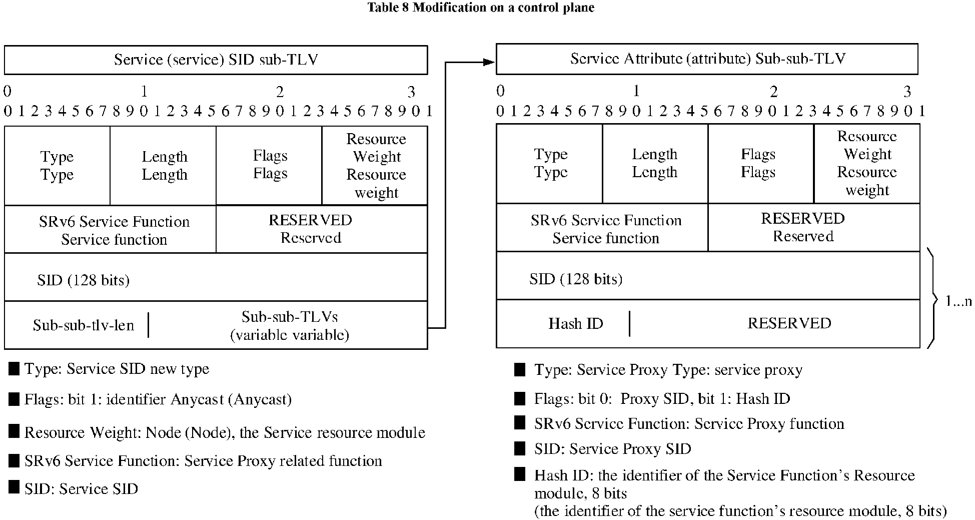

As shown in Table 9, the modification on the data plane is as follows:

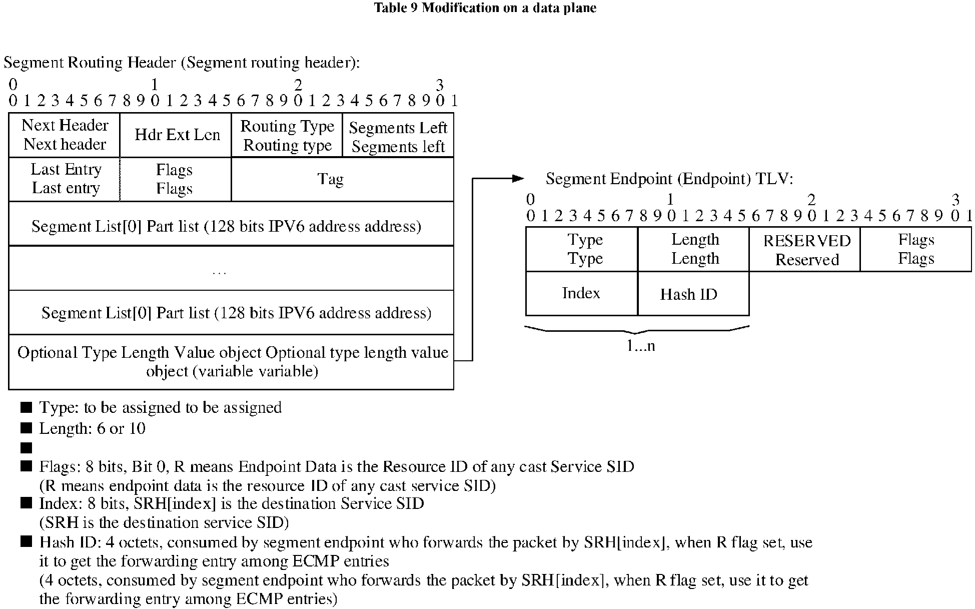

To describe this embodiment of this application more clearly, the following provides two examples for detailed description based on different modification cases of a data stream packet.

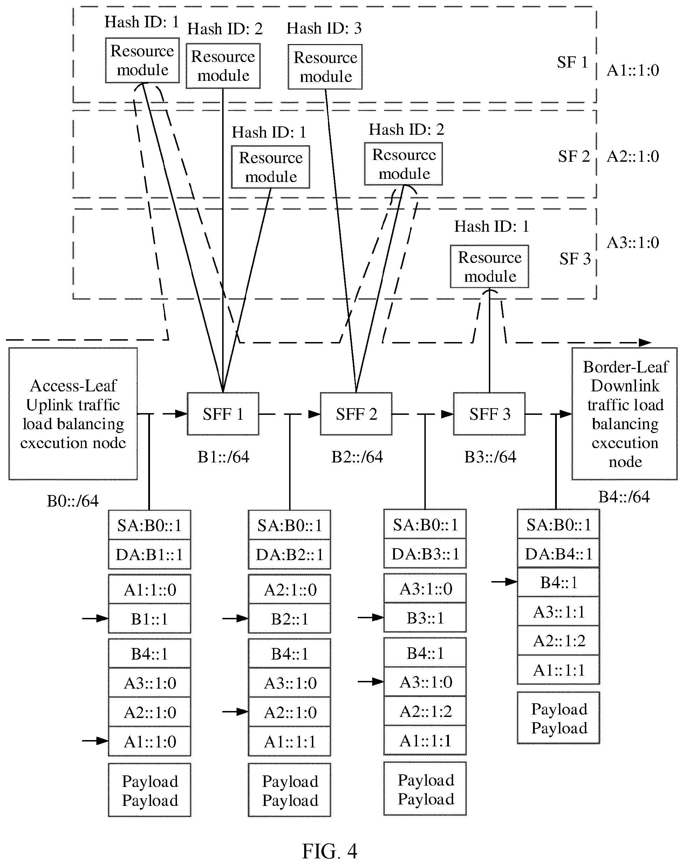

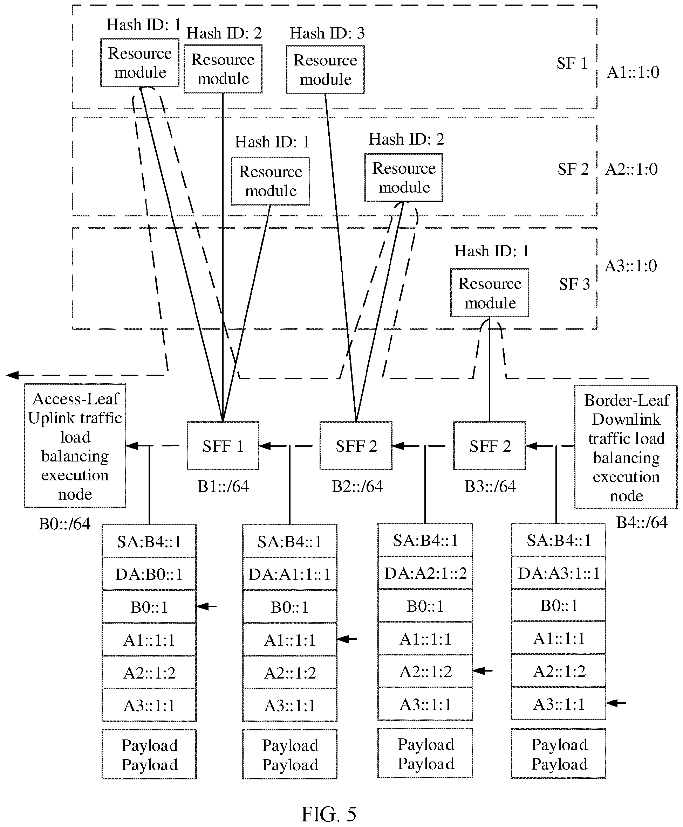

Case 1: After the uplink data stream is processed by the resource module of the SF, as shown in FIG.4, the Arguments field, in the segment list in the SRH, corresponding to the SID is modified, and the resource module that processes the data stream is recorded. Then, the Border-Leaf learns a correspondence between the keyword of the uplink data stream and the segment list in the SRH. When encapsulating the downlink data stream packet, the Border-Leaf uses the SID, which contains valid Arguments, that is learned from the uplink data stream packet. When the network node forwards the downlink data stream packet, as shown in FIG. 5, the Arguments field of the SID is identified as a hash ID, and a forwarding table is searched by using a combined key of Locator:Function and the hash ID.

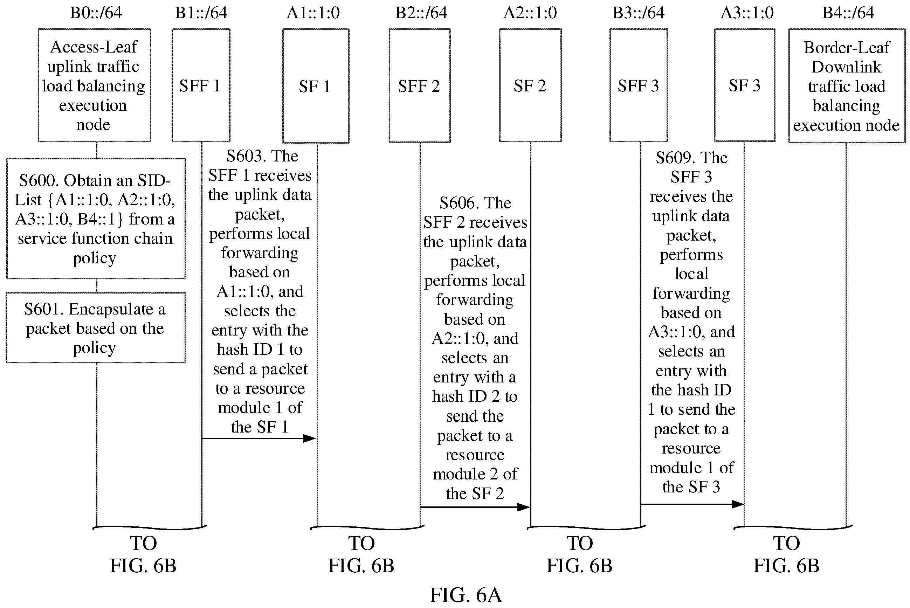

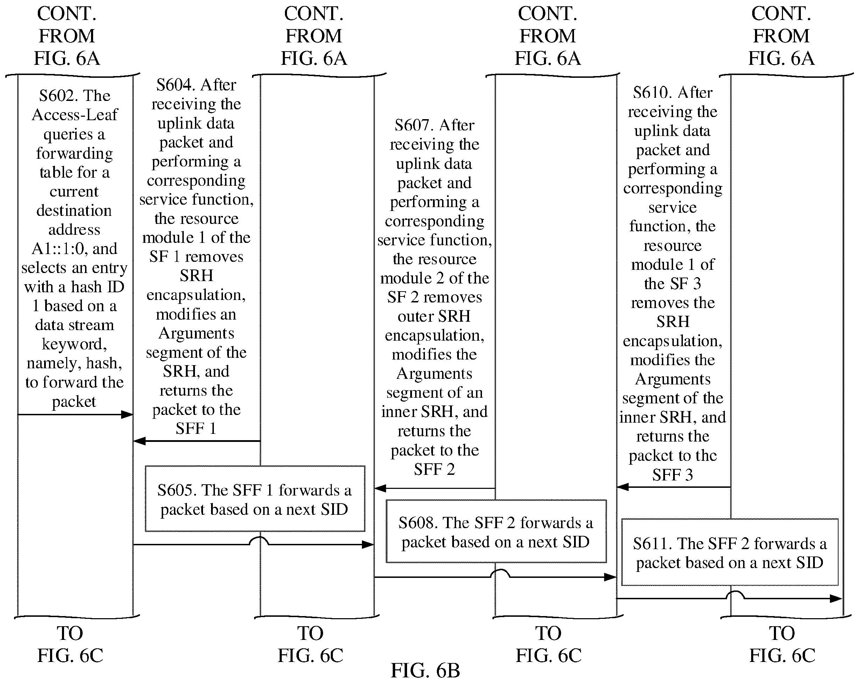

As shown in FIG. 6A to FIG. 6D, an embodiment of this application provides a data stream processing method based on the case 1. Specific steps are as follows:
S600. When an uplink data packet enters an Access-Leaf, obtain an SID-List from a service function chain policy.

It is assumed that the SID-List is {A1::1:0, A2::1:0, A3::1:0, B4::1}, and B4::1 is an SID of a tail node Border-Leaf of the service function chain.

S601. Encapsulate the data packet based on the policy.

The encapsulated packet is (B0::1, A1::1:0)(B4::1, A3::1:0, A2::1:0, A1::1:0; SL=3).

S602. The Access-Leaf queries a forwarding table for a current destination address A1::1:0, selects an entry with a hash ID 1 based on a data stream keyword, namely, hash, to perform forwarding, obtains a transit node B1::1, performs an insertion (T.Insert) operation to insert SRH(A1::1:0, B1::1; SL=1), and finally queries for a destination address B1::1 to forward a data packet (B0::1, B1::1)(A1::1:0, B1::1; SL=1)(B4::1, A3::1:0, A2::1:0, A1::1:0; SL=3).

In an optional implementation in this embodiment of this application, the data stream keyword may be a 5-tuple (source IP, destination IP, protocol number, source port number, destination port number), a triplet (source IP, destination IP, a Flow Label flow label), or the like.

S603. An SFF 1 receives the uplink data packet, performs local forwarding based on A1::1:0, selects the entry with the hash ID 1 to send a packet (B0::1, A1::1:0)(A1::1:0, B1::1; SL=0)(B4::1, A3::1:0, A2::1:0, A1::1:0; SL=3) to a resource module 1 of an SF 1.

It should be noted that, in this embodiment of this application, an entry with a hash ID 2 may be further selected to send the packet to a resource module 2 of the SF 1.

S604. After receiving the uplink data packet and performing a corresponding service function, the resource module 1 of the SF 1 removes outer SRH encapsulation, modifies an Arguments segment of an inner SRH[SL], and returns the packet to the SFF 1.

It should be noted that, in this embodiment of this application, if the SF has no capability of modifying an SID in a segment list, S604 may also be completed by the SFF 1.

S605. The SFF 1 forwards a packet (B0::1, A2::1:0)(B4::1, A3::1:0, A2::1:0, A1::1:1; SL=2) based on a next SID.

S606. An SFF 2 receives the uplink data packet, performs local forwarding based on A2::1:0, and selects an entry with the hash ID 2 to send a packet (B0::1, A2::1:0)(A2::1:0, B2::1; SL=0)(B4::1, A3::1:0, A2::1:2, A1::1:1; SL=2) to a resource module 2 of an SF 2.

S607. After receiving the uplink data packet and performing a corresponding service function, the resource module 2 of the SF 2 removes outer SRH encapsulation, modifies an Arguments segment of an inner SRH[SL], and returns the packet to the SFF 2.

It should be noted that, in this embodiment of this application, if the SF has no capability of modifying an SID in a segment list, S606 may also be completed by the SFF 2.

S608. The SFF 2 forwards a packet (B0::1, A3::1:0)(B4::1, A3::1:0, A2::1:2, A1::1:1; SL=1) based on a next SID.

S609. An SFF 3 receives the uplink data packet, performs local forwarding based on A3::1:0, selects an entry with the hash ID 1 to send a packet (B0::1, A3::1:0)(A3::1:0, B3::1; SL=0)(B4::1, A3::1:1, A2::1:2, A1::1:1; SL=1) to a resource module 1 of an SF 3.

S610. After receiving the uplink data packet and performing a corresponding service function, the resource module 1 of the SF 3 removes outer SRH encapsulation, modifies an Arguments segment of an inner SRH[SL], and returns the packet to the SFF 3.

It should be noted that, in this embodiment of this application, if the SF has no capability of modifying an SID in a segment list, S608 may also be completed by the SFF 3.

S611. The SFF 3 forwards a packet (B0::1, B4::1)(B4::1, A3::1:1, A2::1:2, A1::1:1; SL=0) based on a next SID.

S612. The Border-Leaf receives the uplink data packet, and learns a correspondence between a data stream key and the SID-List, that is, {Flow Key, <A1::1:1, A2::1:2, A3::1:1>}.

S613. When a downlink data stream packet enters the Border-Leaf, obtain an SID-List {A3::1:0, A2::1:0, A1::1:0, B0::1} from the service function chain policy, where B0::1 is an SID of the tail node Access-Leaf of the service function chain.

S614. The Border-Leaf searches, based on a correspondence between flow keys of uplink and downlink data streams, for the record {Flow Key, <A1::1:1, A2::1:2, A3::1:1>} learned in S609, fills in an SRH by using an SID that includes Arguments, and searches the forwarding table by using the destination address A3::1:0 and the hash ID 1 as keywords, to forward a packet (B4::1, A3::1:1)(B0::1, A1::1:1, A2::1:2, A3::1:1; SL=3).

S615. The SFF 3 receives the downlink data packet, and searches the forwarding table by using the destination address A2::1:0 and the hash ID 2 as keywords to forward a packet (B4::1, A2::1:2)(B0::1, A1::1:1, A2::1:2, A3::1:1; SL=2).

S616. The SFF 2 receives the downlink data packet, and searches the forwarding table by using the destination address A1::1:0 and the hash ID 1 as keywords to forward a packet (B4::1, A1::1:1)(B0::1, A1::1:1, A2::1:2, A3::1:1; SL=1).

S617. The SFF 1 receives the downlink data packet, and searches the forwarding table by using a destination address B0::1 as a keyword to forward a packet (B4::1, B0::1)(B0::1, A1::1:1, A2::1:2, A3::1:1; SL=0).

S618. After receiving the downlink data packet, and performing SRH decapsulation, the Access-Leaf forwards the downlink data packet based on an IP header or a MAC header of an inner payload.

The Access-Leaf serving as the tail end of the service function chain may choose to learn or not to learn a correspondence between a flow key of the downlink data stream packet and a hash ID of each SF. In an optional implementation in this embodiment of this application, when a resource module of an SF is faulty in processing, an SFF may perform local protection switching after quickly sensing the fault via a detection mechanism. When uplink traffic reaches the SFF 1, and the SFF 1 senses that the resource module with the hash ID 1 of the SF 1 is faulty, another ECMP entry may be switched to, and the packet is forwarded to the resource module with the hash ID 2 or to a resource module with a hash ID 3 via the SFF 2. When the downlink data stream reaches the SFF 2, and the SFF 2 senses that a resource module with a specified hash ID in the packet is faulty, the SFF 2 may determine, based on a local policy, to discard the packet or select another reachable entry to forward the packet.

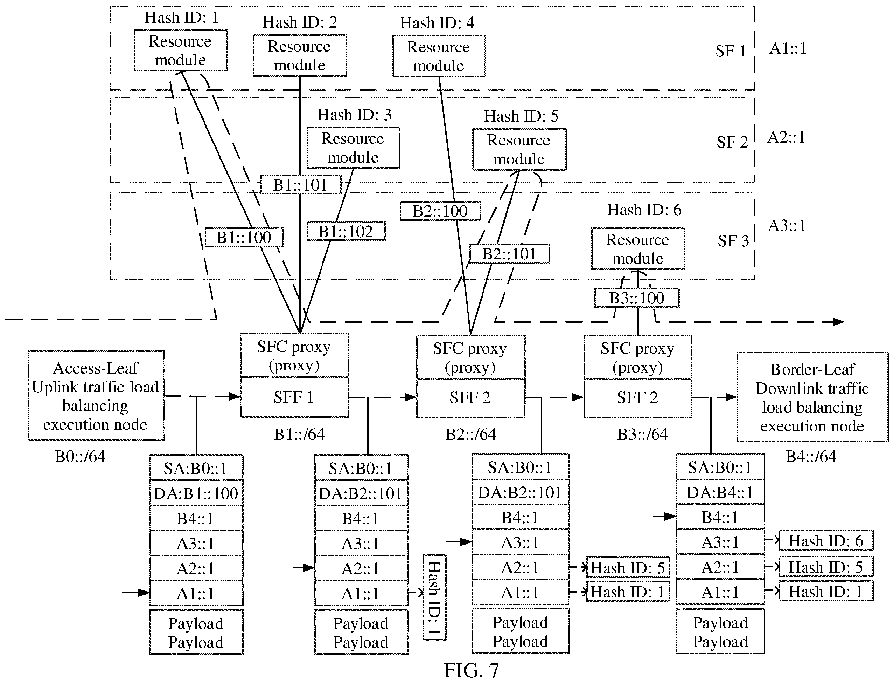

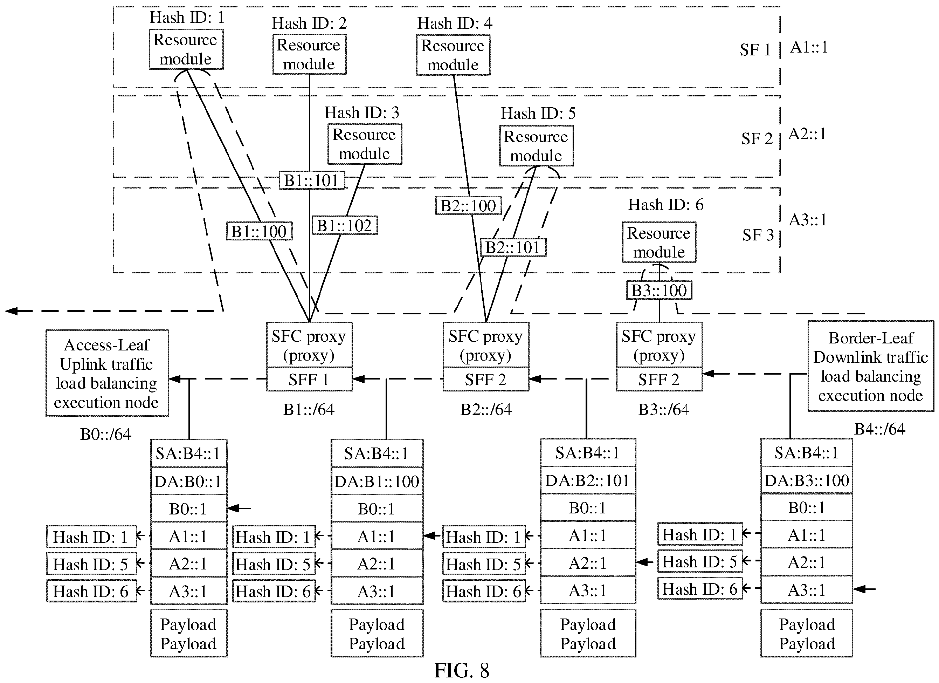

Case 2: After the uplink data stream is processed by the resource module of the SF, as shown in FIG. 7, when forwarding the uplink data stream packet, each network node writes a hash ID of the resource module that performs processing into an optional TLV of the SRH, and adds the hash ID to the tail node of the service function chain hop by hop. The tail node dynamically learns a correspondence between the data stream and the resource module of the SF that processes the stream. After a downlink packet of a data stream enters the service function chain, as shown in FIG. 8, a hash ID of a resource module of an SF that processes an uplink packet of the data stream is searched for, and is encapsulated into an optional TLV of an SRH. A network node searches a table based on a service SID and the hash ID in the SRH, to forward the packet.

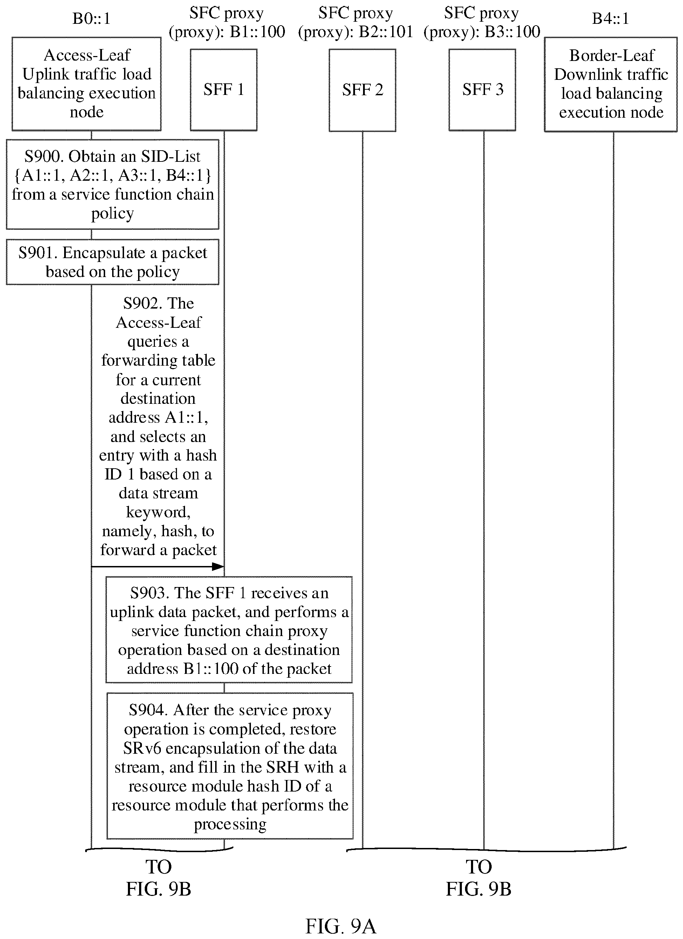

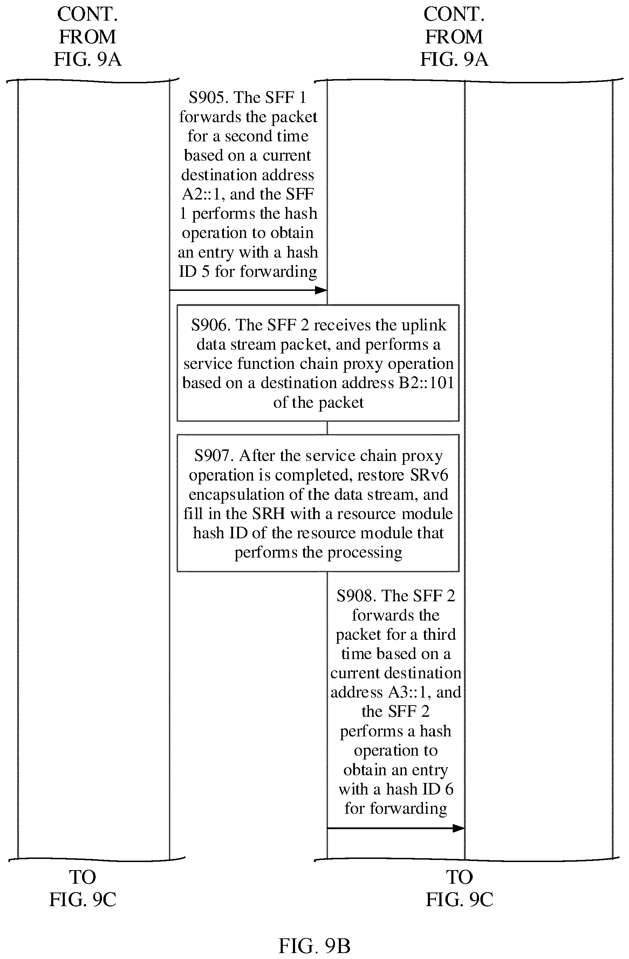

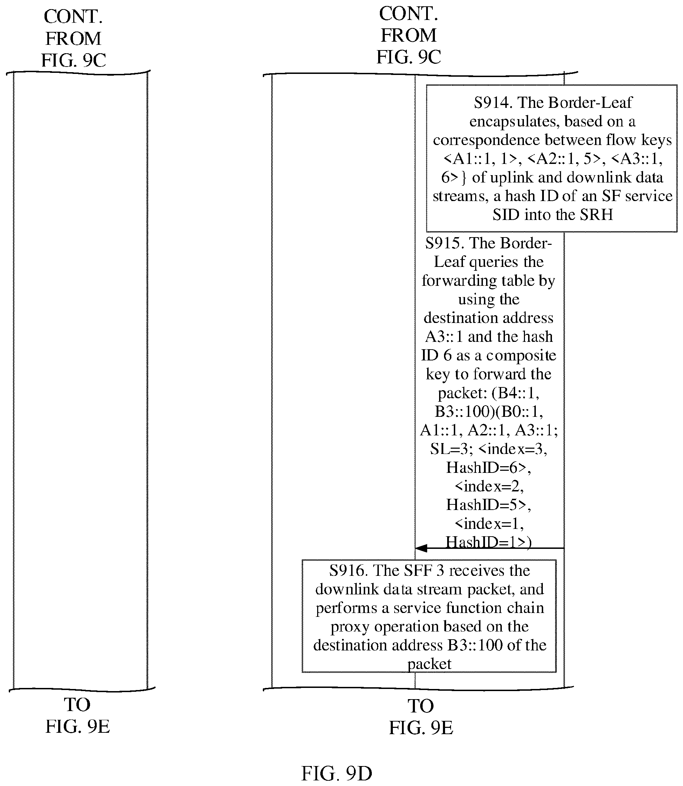

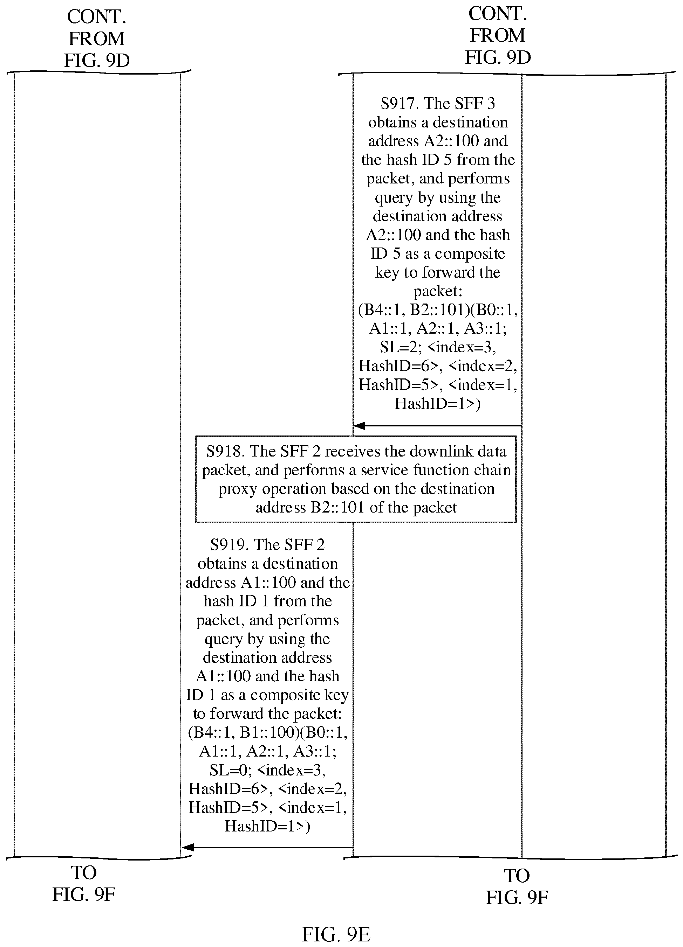

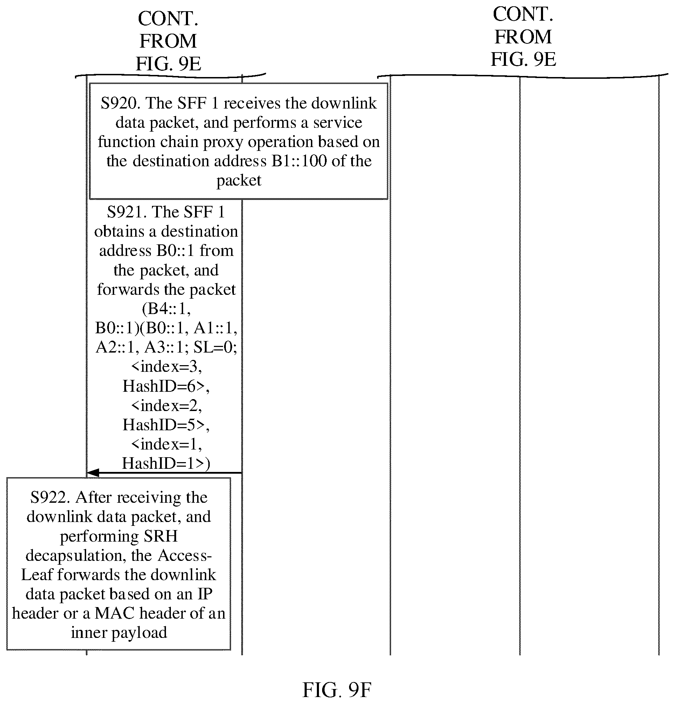

As shown in FIG. 9A to FIG. 9F, an embodiment of this application provides a data stream processing method based on the case 2. A case of selecting a service proxy is described and specific steps are as follows:
S900. When an uplink data packet enters an Access-Leaf, obtain an SID-List from a service function chain policy.

It is assumed that the SID-List is {A1::1, A2::1, A3:: 1, B4::1}, and B4::1 is an SID of a tail node Border-Leaf of the service function chain.

S901. Encapsulate the data packet based on the policy.

The encapsulated packet is (B0::1, A1::1)(B4::1, A3::1, A2::1, A1::1; SL=3).

S902. The Access-Leaf queries a forwarding table for a current destination address A1::1, and selects an entry with a hash ID 1 based on a data stream keyword, namely, hash, to forward a packet (B0::1, B1::100)(B4::1, A3::1, A2::1, A1::1; SL=3).

In an optional implementation in this embodiment of this application, because the SID-List in the entry includes only a unique SID, if no other attribute needs to be specified, an SRH may be omitted, and a destination address in an IPv6 header is directly modified.

S903. An SFF 1 receives the uplink data packet, and performs a service function chain proxy operation based on a destination address B1::100 of the packet.

S904. After the service proxy operation is completed, restore SRv6 encapsulation of the data stream, and fill in the SRH with a resource module hash ID of a resource module that performs the processing.

For example, a resource module hash ID for performing SF 1 processing is filled in the SRH.

A current packet is (B0::1, A2::1)(B4::1, A3::1, A2::1, A1::1; SL=2; <index=3, HashID=1>).

It should be specially noted that, in addition to being completed by the SFF 1, filling of the processing of the hash ID may also be completed by the Access-Leaf. A difference is that after the hash ID is filled by the Access-Leaf, the hash ID needs to be modified when the SFF 1 fast switches the traffic to another resource module due to a fault of a specified resource module. The hash ID may be prevented from being modified repeatedly if modified by the SFF 1.

S905. The SFF 1 forwards the packet for the second time based on a current destination address A2:: 1, and the SFF 1 performs a hash operation to obtain an entry with a hash ID 5 for forwarding.

A current packet is (B0::1, B2::101)(B4::1, A3::1, A2::1, A1::1; SL=2; <index=3, HashID=1>).

S906. An SFF 2 receives the uplink data packet, and performs a service function chain proxy operation based on a destination address B2::101 of the packet.

S907. After the service proxy operation is completed, restore SRv6 encapsulation of the data stream, and fill in the SRH with a resource module hash ID of a resource module that performs the processing.

For example, a resource module hash ID for performing SF 2 processing is filled in the SRH.

A current packet is (B0::1, A3::1)(B4::1, A3::1, A2::1, A1::1; SL=1; <index=3, HashID=1>, <index=2, HashID=5>).

S908. The SFF 2 forwards the packet for the third time based on a current destination address A3::1, and the SFF 2 performs a hash operation to obtain an entry with a hash ID 6 for forwarding.

A current packet is (B0::1, B3::100)(B4::1, A3::1, A2::1, A1::1; SL=1; <index=3, HashID=1>, <index=2, HashID=5>).

S909. An SFF 3 receives the uplink data packet, and performs a service function chain proxy operation based on a destination address B3::100 of the packet.

S910. After the service proxy operation is completed, restore SRv6 encapsulation of the data stream, and fill in the SRH with a resource module hash ID of a resource module that performs the processing.

For example, a resource module hash ID for performing SF 3 processing is filled in the SRH.

A current packet is (B0::1, B4::1)(B4::1, A3::1, A2::1, A1::1; SL=0; <index=3, HashID=1>, <index=2, HashID=5>, <index=1, HashID=6>).

S911. The SFF 3 forwards the packet for the third time based on a current destination address B4::1.

Finally, the SFF 3 forwards the following data packet:
(B0::1, B4::1)(B4::1, A3::1, A2::1, A1::1; SL=0; <index=3, HashID=1>, <index=2, HashID=5>, <index=1, HashID=6>).

S912. The Border-Leaf receives the uplink data packet, and removes the SRH and learns a correspondence between a data stream key and an SF hashID recorded in the SRH, that is, {Flow Key, <A1::1, 1>, <A2::1, 5>, <A3::1, 6>}.

S913. When a downlink data packet enters the Border-Leaf, obtain an SID-List {A3::1, A2::1, A1::1, B0::1} from the service function chain policy, where B0::1 is an SID of the tail node Access-Leaf of the service function chain.

S914. The Border-Leaf searches, based on a correspondence between flow keys of uplink and downlink data streams, for the record {Flow Key, <A1::1, 1>, <A2::1, 5>, <A3::1, 6>} learned in S911, and encapsulates the hash ID of an SF service SID into the SRH:
(B4::1, A3::1)(B0::1, A1::1, A2::1, A3::1; SL=3; <index=3, HashID=1>, <index=2, HashID=5>, <index=1, HashID=6>).

S915. The Border-Leaf queries the forwarding table by using the destination address A3::1 and the hash ID 6 as a composite key to forward the packet:
(B4::1, B3::100)(B0::1, A1::1, A2::1, A3::1; SL=3; <index=3, HashID=1>, <index=2, HashID=5>, <index=1, HashID=6>).

S916. The SFF 3 receives the downlink data packet, and performs a service function chain proxy operation based on a destination address B3::100 of the packet.

After the downlink data stream packet is returned from the destination address B3::100 (for example, the downlink data stream packet is returned from the SF 3), SRv6 encapsulation of the downlink data stream packet is restored:
(B4::1, A2::1)(B0::1, A1::1, A2::1, A3::1; SL=2; <index=3, HashID=1>, <index=2, HashID=5>, <index=1, HashID=6>).

S917. The SFF 3 obtains a destination address A2::100 and the hash ID 5 from the packet, and performs query by using the destination address A2::100 and the hash ID 5 as a composite key to forward the packet:
(B4::1, B2::101)(B0::1, A1::1, A2::1, A3::1; SL=2; <index=3, HashID=1>, <index=2, HashID=5>, <index=1, HashID=6>).

S918. The SFF 2 receives the downlink data packet, and performs a service function chain proxy operation based on the destination address B2::101 of the packet.

After the downlink data stream packet is returned from the destination address B2::101 (for example, the downlink data stream packet is returned from the SF 2), SRv6 encapsulation of the downlink data stream packet is restored:
(B4::1, A1::1)(B0::1, A1::1, A2::1, A3::1; SL=1; <index=3, HashID=1>, <index=2, HashID=5>, <index=1, HashID=6>).

S919. The SFF 2 obtains a destination address A1::100 and the hash ID 1 from the packet, and performs query by using the destination address A1::100 and the hash ID 1 as a composite key to forward the packet:
(B4::1, B1::100)(B0::1, A1::1, A2::1, A3::1; SL=0; <index=3, HashID=1>, <index=2, HashID=5>, <index=1, HashID=6>).

S920. The SFF 1 receives the downlink data packet, and performs a service function chain proxy operation based on the destination address B1::100 of the packet.

After the downlink data stream packet is returned from the destination address B1::100 (for example, the downlink data stream packet is returned from the SF 1), SRv6 encapsulation of the downlink data stream packet is restored:
(B4::1, B0::1)(B0::1, A1::1, A2::1, A3::1; SL=0; <index=3, HashID=1>, <index=2, HashID=5>, <index=1, HashID=6>).

S921. The SFF 1 obtains a destination address B0::1 from the packet, and forwards the packet:
(B4::1, B0::1)(B0::1, A1::1, A2::1, A3::1; SL=0; <index=3, HashID=1>, <index=2, HashID=5>, <index=1, HashID=6>).

S922. After receiving the downlink data packet, and performing SRH decapsulation, the Access-Leaf forwards the downlink data packet based on an IP header or a MAC header of an inner payload.

The Access-Leaf serving as a tail end of the service function chain may choose to learn or not to learn a correspondence between a flow key of the downlink data stream and a hash ID of each SF.

In an optional implementation in this embodiment of this application, when a resource module of an SF is faulty in processing, an SFF/SFC proxy may perform local protection switching after quickly sensing the fault via a detection mechanism. When uplink traffic reaches the SFF 1, and the SFF 1 senses that a resource module with the hash ID 1 of the SF 1 is faulty, the SFF 1 can continue to query a local FIB, and forward the packet to a resource module with a hash ID 2 or forward the packet to a resource module with a hash ID 4 via the SFF 2. When the downlink data stream reaches the SFF 2, and the SFF 2 senses that a resource module with the hash ID 5 of the SF 2 is faulty, the SFF 2 may determine, based on a local policy, to discard the packet or select another local reachable entry to forward the packet.

Based on the foregoing descriptions of the solutions in this application, it may be understood that, to implement the foregoing functions, the foregoing devices include corresponding hardware structures and/or software modules for executing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

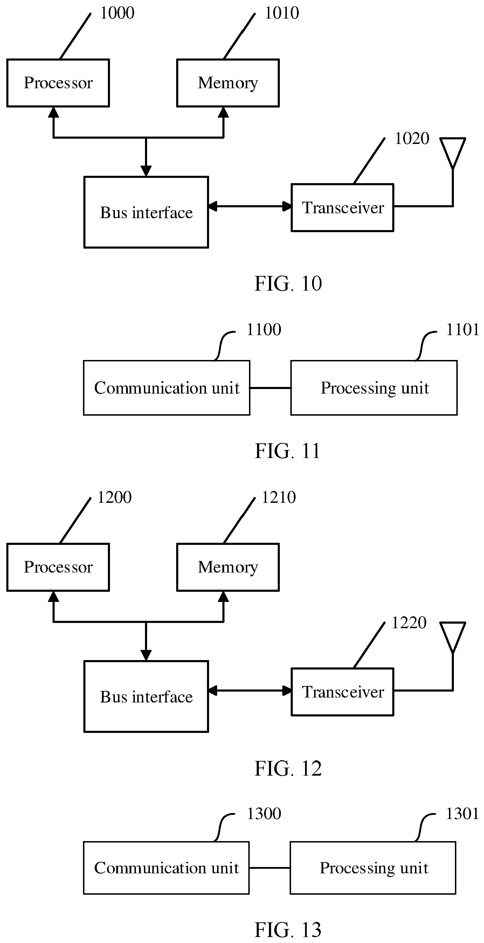

As shown in FIG. 10, this application provides a data stream processing apparatus. The apparatus includes a processor 1000, a memory 1010, and a transceiver 1020.

The processor 1000 is responsible for managing a bus architecture and general processing, and the memory 1010 may store data used when the processor 1000 performs an operation. The transceiver 1020 is configured to receive and send data under control of the processor 1000.

The bus architecture may include any quantity of interconnected buses and bridges, and specifically links together various circuits of one or more processors represented by the processor 1000 and a memory represented by the memory 1010. The bus architecture may further connect various other circuits such as a peripheral device, a voltage stabilizer, and a power management circuit. These are well known in the art, and therefore are not further described in this specification. The bus interface provides an interface. The processor 1000 is responsible for managing the bus architecture and the general processing, and the memory 1010 may store the data used when the processor 1000 performs an operation.

The procedures disclosed in embodiments of this application may be applied to the processor 1000, or may be implemented by the processor 1000. In an implementation process, steps in a signal processing procedure may be completed by using an integrated logic circuit of hardware in the processor 1000 or instructions in a form of software. The processor 1000 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to an embodiment of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1010, and the processor 1000 reads information in the memory 1010 and completes steps of the signal processing procedure in combination with the hardware of the processor 1000.

Specifically, the processor 1000 is configured to read the program in the memory 1010; and perform the method procedure in S300 to S308 shown in FIG. 3A and FIG. 3B; or perform the method procedure in S600 to S618 shown in FIG. 6A to FIG. 6D; or perform the method procedure in S900 to S922 shown in FIG. 9A to FIG. 9F.

As shown in FIG. 11, an embodiment of this application provides a data stream processing apparatus. The apparatus includes:
a communication unit 1100, configured to receive an uplink data stream packet; and
a processing unit 1101, configured to: determine a resource module used to process the uplink data stream packet and an identifier of the resource module; and modify the uplink data stream packet based on the identifier of the resource module, where a modified uplink data stream packet includes the identifier of the resource module used to process the uplink data stream packet.

The communication unit 1100 is further configured to send the modified uplink data stream packet.

Alternatively, when the apparatus runs, the processing unit may perform the method procedure in which the node on the service function chain for transmitting the uplink data stream packet processes the uplink data stream packet in S300 to S305 shown in FIG. 3A, and the communication unit may perform the method procedure in which the node on the service function chain for transmitting the uplink data stream packet receives and/or forwards the uplink data stream packet in S300 to S305 shown in FIG. 3A. Alternatively, the processing unit may perform the method procedure in which the node on the service function chain for transmitting the uplink data stream packet processes the uplink data stream packet in S600 to S612 shown in FIG. 6A to FIG. 6C, and the communication unit may perform the method procedure in which the node on the service function chain for transmitting the uplink data stream packet receives and/or forwards the uplink data stream packet in S600 to S612 shown in FIG. 6A to FIG. 6C. Alternatively, the processing unit may perform the method procedure in which the node on the service function chain for transmitting the uplink data stream packet processes the uplink data stream packet in S900 to S912 shown in FIG. 9A to FIG. 9C, and the communication unit may perform the method procedure in which the node on the service function chain for transmitting the uplink data stream packet receives and/or forwards the uplink data stream packet in S900 to S912 shown in FIG. 9A to FIG. 9C.

In an optional implementation, the processing unit 1101 is specifically configured to:
determine, based on a received uplink data stream packet, a destination address for processing the uplink data stream packet; and determine, from resource modules corresponding to the destination address, a resource module used to process the uplink data stream packet and the identifier of the resource module used to process the uplink data stream packet.

In an optional implementation, the modified uplink data stream packet carries a correspondence between the identifier of the resource module and a service function SF.

In an optional implementation, the processing unit 1101 is specifically configured to:
add the correspondence to an SRH of the uplink data stream packet.

In an optional implementation, the processing unit 1101 is specifically configured to:
add the correspondence to an SID in a segment list in the SRH; or add the correspondence to an optional TLV field in the SRH.

In an optional implementation, the processing unit 1101 is specifically configured to:
search for a forwarding entry based on the destination address, where the forwarding entry includes the resource modules corresponding to the destination address and identifiers of the resource modules corresponding to the destination address; and
obtain, from the forwarding entry, the resource module used to process the uplink data stream packet and the identifier of the resource module used to process the uplink data stream packet.

In an optional implementation, the processing unit 1101 is further configured to:
receive a protocol packet, where the protocol packet carries the destination address and the resource modules corresponding to the destination address; and
generate the forwarding entry based on the protocol packet.

In an optional implementation, the protocol packet further carries some or all of the following:
a service segment identifier SID type, a resource weight Resource Weight, and a segment routing internet protocol version 6 SRv6 service function Service Function.

In an optional implementation, the identifier of the resource module is a globally unique identifier of the resource module, and "globally" is used to represent all service functions SFs in a data stream processing process; and/or the identifier of the resource module is a unique identifier of the resource module in the SF.

In an optional implementation, the processing unit 1101 is further configured to:
receive the downlink data stream packet, where the downlink data stream packet carries the identifier of the resource module used to process the uplink data stream packet, a destination address of a downlink data stream packet is a source address of the uplink data stream packet, and a source address of the downlink data stream packet is the destination address of the uplink data stream packet; and determine, based on the identifier of the resource module used to process the uplink data stream packet, a resource module used to process the downlink data stream packet, where the resource module used to process the downlink data stream packet is the same as the resource module used to process the uplink data stream packet.

In an optional implementation, the processing unit 1101 is specifically configured to:
determine, based on the received downlink data stream packet, the destination address for processing the downlink data stream packet; and
determine, based on the destination address and the identifier of the resource module used to process the uplink data stream packet, the resource module used to process the downlink data stream packet.

In an optional implementation, the processing unit 1101 is further configured to:
add, to the segment routing header SRH of the downlink data stream packet, a correspondence between the identifier of the resource module used to process the uplink data stream packet and the service function SF.

Functions of the communication unit 1100 and the processing unit 1101 shown in FIG. 11 may be executed by the processor 1000 by running a program in the memory 1010, or may be independently executed by the processor 1000.

As shown in FIG. 12, this application provides a data stream processing apparatus. The apparatus includes a processor 1200, a memory 1210, and a transceiver 1220.

The processor 1200 is responsible for managing a bus architecture and general processing, and the memory 1210 may store data used when the processor 1200 performs an operation. The transceiver 1220 is configured to receive and send data under control of the processor 1200.

The bus architecture may include any quantity of interconnected buses and bridges, and specifically links together various circuits of one or more processors represented by the processor 1200 and a memory represented by the memory 1210. The bus architecture may further connect various other circuits such as a peripheral device, a voltage stabilizer, and a power management circuit. These are well known in the art, and therefore are not further described in this specification. The bus interface provides an interface. The processor 1200 is responsible for managing the bus architecture and the general processing, and the memory 1210 may store the data used when the processor 1200 performs an operation.

The procedures disclosed in embodiments of this application may be applied to the processor 1200, or may be implemented by the processor 1200. In an implementation process, steps in a signal processing procedure may be completed by using an integrated logic circuit of hardware in the processor 1200 or instructions in a form of software. The processor 1200 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to an embodiment of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1210, and the processor 1200 reads information in the memory 1210 and completes steps of the signal processing procedure in combination with the hardware of the processor 1200.

Specifically, the processor 1200 is configured to read the program in the memory 1201; and perform the method procedure in S300 to S308 shown in FIG. 3A and FIG. 3B; or perform the method procedure in S600 to S618 shown in FIG. 6A to FIG. 6D; or perform the method procedure in S900 to S922 shown in FIG. 9A to FIG. 9F.

As shown in FIG. 13, this application provides a data stream processing apparatus. The apparatus includes:
a communication unit 1300, configured to receive a downlink data stream packet, where the downlink data packet carries an identifier of a resource module used to process an uplink data stream packet corresponding to the downlink data stream packet; and
a processing unit 1301, configured to determine, based on the identifier of the resource module used to process the uplink data stream packet, a resource module used to process the downlink data stream packet, where the resource module used to process the downlink data stream packet is the same as the resource module used to process the uplink data stream packet.

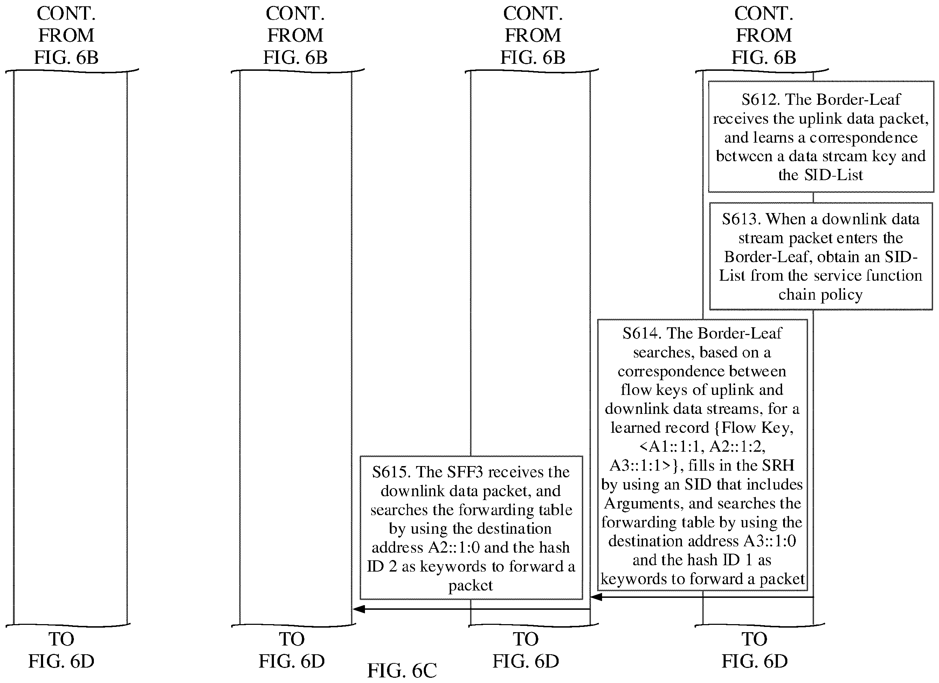

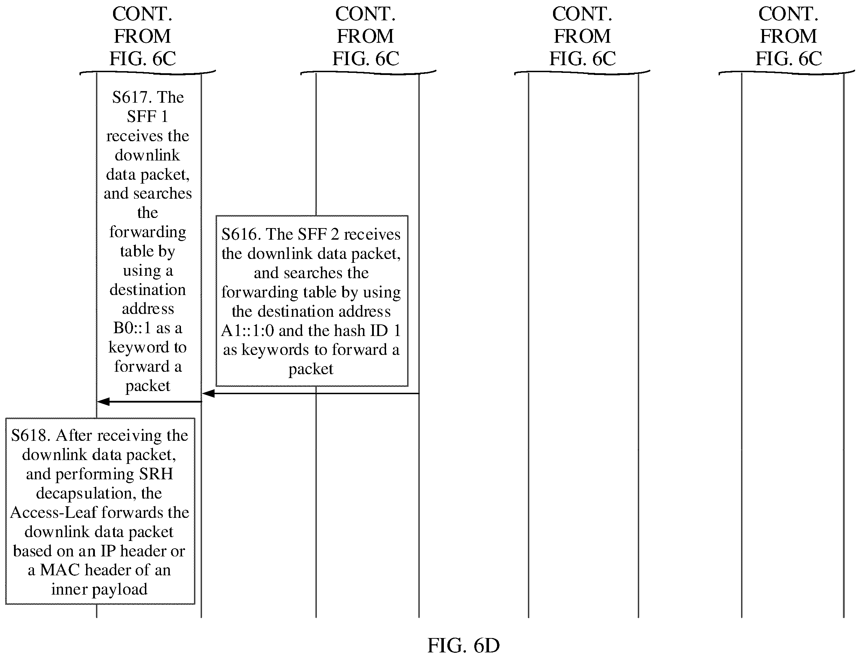

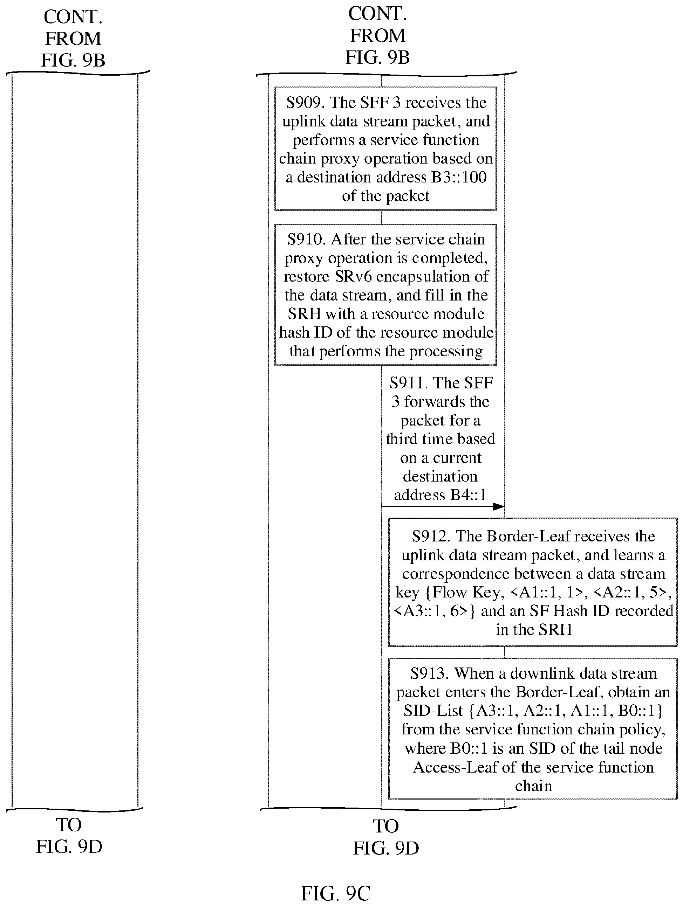

Alternatively, when the apparatus runs, the processing unit may perform the method procedure in which the node on the service function chain for transmitting the downlink data stream packet processes the downlink data stream packet in S306 to S308 shown in FIG. 3B, and the communication unit may perform the method procedure in which the node on the service function chain for transmitting the downlink data stream packet receives and/or forwards the downlink data stream packet in S306 to S308 shown in FIG. 3B. Alternatively, the processing unit may perform the method procedure in which the node on the service function chain for transmitting the downlink data stream packet processes the downlink data stream packet in S613 to S618 shown in FIG. 6C and FIG. 6D, and the communication unit may perform the method procedure in which the node on the service function chain for transmitting the downlink data stream packet receives and/or forwards the downlink data stream packet in S613 to S618 shown in FIG. 6C and FIG. 6D. Alternatively, the processing unit may perform the method procedure in which the node on the service function chain for transmitting the downlink data stream packet processes the downlink data stream packet in S913 to S922 shown in FIG. 9C to FIG. 9F, and the communication unit may perform the method procedure in which the node on the service function chain for transmitting the downlink data stream packet receives and/or forwards the downlink data stream packet in S913 to S922 shown in FIG. 9C to FIG. 9F.

In an optional implementation, the processing unit 1301 is further configured to:
receive the uplink data stream packet, where the uplink data stream packet carries a correspondence between the identifier of the resource module used to process the uplink data stream packet and a service functions SF through which the uplink data stream packet passes; and
generate a learning record based on the uplink data stream packet, where the learning record includes the correspondence between the identifier of the resource module used to process the uplink data stream packet and the SF through which the uplink data stream packet passes.

In an optional implementation, the processing unit 1301 is previously further configured to:
determine the learning record based on a correspondence between the uplink data stream packet and the downlink data stream packet; and
add, to the downlink data stream packet, the correspondence, included in the learning record, between the identifier of the resource module used to process the uplink data stream packet and the SF through which the uplink data stream packet passes.

In an optional implementation, the processing unit 1301 is specifically configured to:
add, to a segment routing header SRH of the downlink data stream packet, the correspondence between the identifier of the resource module used to process the uplink data stream packet and the SF through which the uplink data stream passes.

In an optional implementation, the processing unit 1301 is specifically configured to:
add, to a segment routing identifier SID in a segment list in the SRH, the correspondence between the identifier of the resource module used to process the uplink data stream packet and the service function SF through which the uplink data stream passes; or
add, to an optional type-length-value TLV field in the SRH, the correspondence between the identifier of the resource module used to process the uplink data stream packet and the service function SF through which the uplink data stream passes.

In an optional implementation, the processing unit 1301 is specifically configured to:
determine, based on a destination address, resource modules corresponding to the SF, and determine, based on the correspondence between the identifier of the resource module used to process the uplink data stream packet and the SF through which the uplink data stream passes, a resource module used to process the downlink data stream packet from the resource modules corresponding to the SF.

In an optional implementation, the processing unit 1301 is further configured to:
after determining that the resource module corresponding to the identifier of the resource module used to process the uplink data stream packet is faulty, re-select a resource module from remaining resource modules corresponding to the SF to process the downlink data stream packet.

In an optional implementation, the identifier of the resource module used to process the uplink data stream packet is a globally unique identifier of the resource module used to process the uplink data stream packet, and "globally" is used to represent all service functions SFs in a data stream processing process; and/or the identifier of the resource module is a unique identifier, in the SF, of the resource module used to process the uplink data stream packet.

Functions of the communication unit 1300 and the processing unit 1301 shown in FIG. 13 may be executed by the processor 1200 by running a program in the memory 1210, or may be independently executed by the processor 1200.

An embodiment of this application further provides a data stream processing system, including a first node, a second node, and the like.

The first node may be the node, shown in FIG. 3A and FIG. 3B, FIG. 6A to FIG. 6D, or FIG. 9A to FIG. 9F, that transmits the uplink data stream packet; and the second node may be the node, shown in FIG. 3A and FIG. 3B, FIG. 6A to FIG. 6D, or FIG. 9A to FIG. 9F, that transmits the downlink data stream packet.

When the system runs, the first node may perform, for example, a method procedure performed by the node when transmitting the uplink data stream packet in S300 to S308 shown in FIG. 3A and FIG. 3B; perform, for example, a method procedure performed by the node when transmitting the uplink data stream packet in S600 to S618 shown in FIG. 6A to FIG. 6D; or perform, for example, a method procedure performed by the node when transmitting the uplink data stream packet in S900 to S922 shown in FIG. 9A to FIG. 9F. Details are not described herein.

The second node may perform, for example, a method procedure performed by the node when transmitting the downlink data stream packet in S300 to S308 shown in FIG. 3 A and FIG. 3B; perform, for example, a method procedure performed by the node when transmitting the downlink data stream packet in S600 to S618 shown in FIG. 6A to FIG. 6D; or perform, for example, a method procedure performed by the node when transmitting the downlink data stream packet in S900 to S922 shown in FIG. 9A to FIG. 9F. Details are not described herein.

In some possible implementations, each aspect of the data stream processing method provided in embodiments of this application may be further implemented in a form of a program product, including program code. When the program code is run on a computer device, the program code is used to enable the computer device to perform the steps in the data stream processing methods described in this specification and according to various example implementations of this application.

The program product may be any combination of one or more readable media. The readable medium may be a readable signal medium or a readable storage medium. For example, the readable storage medium may be, but is not limited to, an electrical, a magnetic, an optical, an electromagnetic, an infrared, or a semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

The program product for data stream processing according to implementations of this application may use a portable compact disc read-only memory (CD-ROM), include program code, and run on a server device. However, the program product in this application is not limited thereto. In this document, the readable storage medium may be any tangible medium that includes or stores a program, and the program may be used by a data stream processing apparatus or component or used in combination with the data stream processing apparatus or component.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be completely executed on a computer device of a user, partially executed on user equipment, executed as an independent software package, partially executed on a computer device of a user and partially executed on a remote computer device, or completely executed on a remote computer device or server. When the program code is executed on the remote computer device, the remote computer device may be connected to the user's computer device by using any type of network, including a local area network (LAN) or a wide area network (WAN), or may be connected to an external computer device.

An embodiment of this application further provides a computer device-readable storage medium for the data stream processing method. That is, content is not lost after power-off. The storage medium stores a software program, including program code. When the program code is run on a computer device, and the software program is read and executed by one or more processors, any one of the foregoing data stream processing solutions in embodiments of this application can be implemented.

The foregoing describes this application with reference to the block diagrams and/or flowcharts of the method, the apparatus (system), and/or the computer program product in embodiments of this application. It should be understood that a block of the block diagrams and/or flowcharts and a combination of blocks in the block diagrams and/or flowcharts, can be implemented by using computer program instructions. These computer program instructions may be provided to a processor of a general-purpose computer, a processor of a dedicated computer, or another programmable data processing apparatus to produce a machine, so that the instructions executed by the processor of the computer and/or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

Although this application is described with reference to specific features and embodiments thereof, it is clear that various modifications and combinations may be made to them without departing from the scope of this application, as defined by the appended set of claims. It is clearly that, a person skilled in the art can make various modifications and variations to this application without departing from the scope of this application provided that they fall within the scope of protection defined by the following claims.

## Claims

1. A data stream processing method, comprising:
receiving (S301) an uplink data stream packet;
determining (S302) a resource module from among multiple resource modules of a same service function, SF, used to process the uplink data stream packet and an identifier of the resource module used to process the uplink data stream packet;
modifying (S303) the uplink data stream packet based on the identifier of the resource module, wherein a modified uplink data packet comprises the identifier of the resource module used to process the uplink data stream packet; and
sending (S304) the modified uplink data stream packet;
wherein the determining of the resource module used to process the uplink data stream packet and the identifier of the resource module used to process the uplink data stream packet comprises:
determining, based on the received uplink data stream packet, a destination address for processing the uplink data stream packet; and
determining, from resource modules corresponding to the destination address, the resource module used to process the uplink data stream packet and the identifier of the resource module used to process the uplink data stream packet;
wherein the determining, from resource modules corresponding to the destination address, the resource module used to process the uplink data stream packet and the identifier of the resource module used to process the uplink data stream packet comprises:
searching for a forwarding entry based on the destination address, wherein the forwarding entry comprises the resource modules corresponding to the destination address and identifiers of the resource modules corresponding to the destination address; and
obtaining, from the forwarding entry, the resource module used to process the uplink data stream packet and the identifier of the resource module used to process the uplink data stream packet;
wherein the method further comprises:
receiving a protocol packet, wherein the protocol packet carries the destination address and the resource modules corresponding to the destination address; and
generating the forwarding entry based on the protocol pack.

2. The method according to claim 1, wherein the modified uplink data stream packet carries a correspondence between the identifier of the resource module and the SF;
wherein the modifying the uplink data stream packet comprises:
adding the correspondence to a segment routing header SRH of the uplink data stream packet;
wherein the adding the correspondence to the SRH of the uplink data stream packet comprises:
adding the correspondence to a segment routing identifier SID in a segment list in the SRH; or
adding the correspondence to an optional type-length-value TLV field in the SRH.

3. The method according to any one of claims 1 to 2, wherein the identifier of the resource module is used to uniquely identify the resource module in the SF to which the resource module belongs, or the identifier of the resource module is used to uniquely identify the resource module in all SFs for processing a data stream.

4. The method according to any one of claims 1 to 3, wherein after the forwarding the modified uplink data stream packet, the method further comprises:
receiving a downlink data stream packet, wherein the downlink data stream packet carries the identifier of the resource module used to process the uplink data stream packet, a destination address of the downlink data stream packet is a source address of the uplink data stream packet, and a source address of the downlink data stream packet is the destination address of the uplink data stream packet; and
determining, based on the identifier of the resource module used to process the uplink data stream packet, a resource module used to process the downlink data stream packet, wherein the resource module used to process the downlink data stream packet is the same as the resource module used to process the uplink data stream packet.

5. The method according to claim 4, wherein the determining, based on the identifier of the resource module, a resource module used to process the downlink data stream packet comprises:
determining, based on the received downlink data stream packet, the destination address for processing the downlink data stream packet; and
determining, based on the destination address and the identifier of the resource module used to process the uplink data stream packet, the resource module used to process the downlink data stream packet.

6. The method according to claim 5, wherein before the determining, based on the identifier of the resource module used to process the uplink data stream packet, a resource module used to process the downlink data stream packet, the method further comprises:
adding, to a segment routing header SRH of the downlink data stream packet, the correspondence between the identifier of the resource module used to process the uplink data stream packet and the SF.

7. A data stream processing apparatus, comprising a processing unit and a communication unit, wherein
the communication unit is configured to receive an uplink data stream packet;
the processing unit is configured to: determine a resource module from among multiple resource modules of a same service function, SF, used to process the uplink data stream packet and an identifier of the resource module used to process the uplink data stream packet; and modify the uplink data stream packet based on the identifier of the resource module, wherein a modified uplink data stream packet comprises the identifier of the resource module used to process the uplink data stream packet; and
the communication unit is further configured to send the modified uplink data stream packet;
wherein the processing unit is specifically configured to:
determine, based on the received uplink data stream packet, a destination address for processing the uplink data stream packet; and
determine, from resource modules corresponding to the destination address, the resource module used to process the uplink data stream packet and the identifier of the resource module used to process the uplink data stream packet;
wherein the processing unit is specifically configured to:
determine a forwarding entry based on the destination address, wherein the forwarding entry comprises the resource modules corresponding to the destination address and identifiers of the resource modules corresponding to the destination address; and
obtain, from the forwarding entry, the resource module used to process the uplink data stream packet and the identifier of the resource module used to process the uplink data stream packet;
wherein the processing unit is further configured to:
receive a protocol packet, wherein the protocol packet carries the destination address and the resource modules corresponding to the destination address; and
generate the forwarding entry based on the protocol packet.

## Patentansprüche

1. Datenstromverarbeitungsverfahren, umfassend:
Empfangen (S301) eines Uplink-Datenstrompakets;
Bestimmen (S302) eines Ressourcenmoduls aus mehreren Ressourcenmodulen einer gleichen Servicefunktion, SF, das dazu verwendet wird, das Uplink-Datenstrompaket zu verarbeiten, und einer Kennung des Ressourcenmoduls, das dazu verwendet wird, das Uplink-Datenstrompaket zu verarbeiten;
Modifizieren (S303) des Uplink-Datenstrompakets basierend auf der Kennung des Ressourcenmoduls, wobei ein modifiziertes Uplink-Datenpaket die Kennung des Ressourcenmoduls umfasst, das dazu verwendet wird, das Uplink-Datenstrompaket zu verarbeiten; und
Senden (S304) des modifizierten Uplink-Datenstrompakets;
wobei das Bestimmen des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten, Folgendes umfasst:
Bestimmen, basierend auf dem empfangenen Uplink-Datenstrompaket, einer Zieladresse zum Verarbeiten des Uplink-Datenstrompakets; und Bestimmen, aus Ressourcenmodulen, die der Zieladresse entsprechen, des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten;
wobei das Bestimmen, aus Ressourcenmodulen, die der Zieladresse entsprechen, des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten, Folgendes umfasst:
Suchen nach einem Weiterleitungseintrag basierend auf der Zieladresse, wobei der Weiterleitungseintrag die Ressourcenmodule, die der Zieladresse entsprechen, und Kennungen der Ressourcenmodule, die der Zieladresse entsprechen, umfasst; und
Erlangen, von dem Weiterleitungseintrag, des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten;
wobei das Verfahren ferner Folgendes umfasst:
Empfangen eines Protokollpakets, wobei das Protokollpaket die Zieladresse und die Ressourcenmodule, die der Zieladresse entsprechen, enthält; und
Erzeugen des Weiterleitungseintrags basierend auf dem Protokollpaket.

2. Verfahren nach Anspruch 1, wobei das modifizierte Uplink-Datenstrompaket eine Entsprechung zwischen der Kennung des Ressourcenmoduls und der SF enthält;
wobei das Modifizieren des Uplink-Datenstrompakets Folgendes umfasst:
Hinzufügen der Entsprechung zu einem Segment-Routing-Header, SRH, des Uplink-Datenstrompakets;
wobei das Hinzufügen der Entsprechung zu dem SRH des Uplink-Datenstrompakets Folgendes umfasst:
Hinzufügen der Entsprechung zu einer Segment-Routing-Kennung, SID, in einer Segmentliste in dem SRH; oder
Hinzufügen der Entsprechung zu einem optionalen Art-Länge-Wertfeld, TLV-Feld, in dem SRH.

3. Verfahren nach einem der Ansprüche 1 bis 2, wobei die Kennung des Ressourcenmoduls dazu verwendet wird, das Ressourcenmodul in der SF, zu der das Ressourcenmodul gehört, eindeutig zu identifizieren, oder die Kennung des Ressourcenmoduls dazu verwendet wird, das Ressourcenmodul in allen SFs zum Verarbeiten eines Datenstroms eindeutig zu identifizieren.

4. Verfahren nach einem der Ansprüche 1 bis 3, wobei das Verfahren nach dem Weiterleiten des modifizierten Uplink-Datenstrompakets ferner Folgendes umfasst:
Empfangen eines Downlink-Datenstrompakets, wobei das Downlink-Datenstrompaket die Kennung des Ressourcenmoduls enthält, das dazu verwendet wird, das Uplink-Datenstrompaket zu verarbeiten, eine Zieladresse des Downlink-Datenstrompakets eine Quelladresse des Uplink-Datenstrompakets ist und eine Quelladresse des Downlink-Datenstrompakets die Zieladresse des Uplink-Datenstrompakets ist; und
Bestimmen, basierend auf der Kennung des Ressourcenmoduls, das dazu verwendet wird, das Uplink-Datenstrompaket zu verarbeiten, eines Ressourcenmoduls, das dazu verwendet wird, das Downlink-Datenstrompaket zu verarbeiten, wobei das Ressourcenmodul, das dazu verwendet wird, das Downlink-Datenstrompaket zu verarbeiten, das gleiche wie das Ressourcenmodul ist, das dazu verwendet wird, das Uplink-Datenstrompaket zu verarbeiten.

5. Verfahren nach Anspruch 4, wobei das Bestimmen, basierend auf der Kennung des Ressourcenmoduls, eines Ressourcenmoduls, das dazu verwendet wird, das Downlink-Datenstrompaket zu verarbeiten, Folgendes umfasst:
Bestimmen, basierend auf dem empfangenen Downlink-Datenstrompaket, der Zieladresse zum Verarbeiten des Downlink-Datenstrompakets; und
Bestimmen, basierend auf der Zieladresse und der Kennung des Ressourcenmoduls, das dazu verwendet wird, das Uplink-Datenstrompaket zu verarbeiten, des Ressourcenmoduls, das dazu verwendet wird, das Downlink-Datenstrompaket zu verarbeiten.

6. Verfahren nach Anspruch 5, wobei das Verfahren vor dem Bestimmen, basierend auf der Kennung des Ressourcenmoduls, das dazu verwendet wird, das Uplink-Datenstrompaket zu verarbeiten, eines Ressourcenmoduls, das dazu verwendet wird, das Downlink-Datenstrompaket zu verarbeiten, ferner Folgendes umfasst:
Hinzufügen, zu einem Segment-Routing-Header, SRH, des Downlink-Datenstrompakets, der Entsprechung zwischen der Kennung des Ressourcenmoduls, das dazu verwendet wird, das Uplink-Datenstrompaket zu verarbeiten, und der SF.

7. Datenstromverarbeitungsgerät, umfassend eine Verarbeitungseinheit und eine Kommunikationseinheit, wobei
die Kommunikationseinheit dazu konfiguriert ist, ein Uplink-Datenstrompaket zu empfangen;
die Verarbeitungseinheit zu Folgendem konfiguriert ist: Bestimmen eines Ressourcenmoduls aus mehreren Ressourcenmodulen einer gleichen Servicefunktion, SF, das dazu verwendet wird, das Uplink-Datenstrompaket zu verarbeiten, und einer Kennung des Ressourcenmoduls, das dazu verwendet wird, das Uplink-Datenstrompaket zu verarbeiten; und Modifizieren des Uplink-Datenstrompakets basierend auf der Kennung des Ressourcenmoduls, wobei ein modifiziertes Uplink-Datenstrompaket die Kennung des Ressourcenmoduls umfasst, das dazu verwendet wird, das Uplink-Datenstrompaket zu verarbeiten; und
die Kommunikationseinheit ferner dazu konfiguriert ist, das modifizierte Uplink-Datenstrompaket zu senden;
wobei die Verarbeitungseinheit speziell zu Folgendem konfiguriert ist:
Bestimmen, basierend auf dem empfangenen Uplink-Datenstrompaket, einer Zieladresse zum Verarbeiten des Uplink-Datenstrompakets; und
Bestimmen, aus Ressourcenmodulen, die der Zieladresse entsprechen, des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten;
wobei die Verarbeitungseinheit speziell zu Folgendem konfiguriert ist:
Bestimmen eines Weiterleitungseintrags basierend auf der Zieladresse, wobei der Weiterleitungseintrag die Ressourcenmodule, die der Zieladresse entsprechen, und Kennungen der Ressourcenmodule, die der Zieladresse entsprechen, umfasst; und
Erlangen, von dem Weiterleitungseintrag, des Ressourcenmoduls, das dazu verwendet wird, das Uplink-Datenstrompaket zu verarbeiten, und der Kennung des Ressourcenmoduls, das dazu verwendet wird, das Uplink-Datenstrompaket zu verarbeiten;
wobei die Verarbeitungseinheit ferner zu Folgendem konfiguriert ist:
Empfangen eines Protokollpakets, wobei das Protokollpaket die Zieladresse und die Ressourcenmodule, die der Zieladresse entsprechen, enthält; und
Erzeugen des Weiterleitungseintrags basierend auf dem Protokollpaket.

## Revendications

1. Procédé de traitement de flux de données, comprenant :
la réception (S301) d'un paquet de flux de données de liaison montante ;
la détermination (S302) d'un module de ressources parmi plusieurs modules de ressources d'une même fonction de service, FS, utilisé pour traiter le paquet de flux de données de liaison montante et d'un identifiant du module de ressources utilisé pour traiter le paquet de flux de données de liaison montante ;
la modification (S303) du paquet de flux de données de liaison montante en fonction de l'identifiant du module de ressources, un paquet de données de liaison montante modifié comprenant l'identifiant du module de ressources utilisé pour traiter le paquet de flux de données de liaison montante ; et
l'envoi (S304) du paquet de flux de données de liaison montante modifié ;
dans lequel la détermination du module de ressources utilisé pour traiter le paquet de flux de données de liaison montante et l'identifiant du module de ressources utilisé pour traiter le paquet de flux de données de liaison montante comprend :
la détermination, en fonction du paquet de flux de données de liaison montante reçu, d'une adresse de destination pour le traitement du paquet de flux de données de liaison montante ; et
la détermination, à partir de modules de ressources correspondant à l'adresse de destination, du module de ressources utilisé pour traiter le paquet de flux de données de liaison montante et de l'identifiant du module de ressources utilisé pour traiter le paquet de flux de données de liaison montante ;
la détermination, à partir de modules de ressources correspondant à l'adresse de destination, du module de ressources utilisé pour traiter le paquet de flux de données de liaison montante et de l'identifiant du module de ressources utilisé pour traiter le paquet de flux de données de liaison montante comprend :
la recherche d'une entrée de transfert en fonction de l'adresse de destination, l'entrée de transfert comprenant les modules de ressources correspondant à l'adresse de destination et les identifiants des modules de ressources correspondant à l'adresse de destination ; et
l'obtention, à partir de l'entrée de transfert, du module de ressources utilisé pour traiter le paquet de flux de données de liaison montante et l'identifiant du module de ressources utilisé pour traiter le paquet de flux de données de liaison montante ;
dans lequel le procédé comprend également :
la réception d'un paquet de protocole, dans lequel le paquet de protocole transporte l'adresse de destination et les modules de ressources correspondant à l'adresse de destination ; et
la génération de l'entrée de transfert en fonction du pack de protocole.

2. Procédé selon la revendication 1, dans lequel le paquet de flux de données de liaison montante modifié transporte une correspondance entre l'identifiant du module de ressources et la FS ;
dans lequel la modification du paquet de flux de données de liaison montante comprend :
l'ajout de la correspondance à un en-tête de routage de segment ERS du paquet de flux de données de liaison montante ;
dans lequel l'ajout de la correspondance à l'ERS du paquet de flux de données de liaison montante comprend :
l'ajout de la correspondance à un identifiant de routage de segment IRS dans une liste de segments dans l'ERS ; ou
l'ajout de la correspondance à un champ type-longueur-valeur TLV facultatif dans l'ERS.

3. Procédé selon l'une quelconque des revendications 1 à 2, dans lequel l'identifiant du module de ressources est utilisé pour identifier de manière unique le module de ressources dans la FS à laquelle appartient le module de ressources, ou l'identifiant du module de ressources est utilisé pour identifier de manière unique le module de ressources dans toutes les FS pour traiter un flux de données.

4. Procédé selon l'une quelconque des revendications 1 à 3, dans lequel après le transfert du paquet de flux de données modifié de liaison montante, le procédé comprend également :
la réception d'un paquet de flux de données de liaison descendante, dans lequel le paquet de flux de données de liaison descendante transporte l'identifiant du module de ressources utilisé pour traiter le paquet de flux de données de liaison montante, une adresse de destination du paquet de flux de données de liaison descendante est une adresse source du paquet de flux de données de liaison montante, et une adresse source du paquet de flux de données de liaison descendante est l'adresse de destination du paquet de flux de données de liaison montante ; et
la détermination, en fonction de l'identifiant du module de ressources utilisé pour traiter le paquet de flux de données de liaison montante, d'un module de ressources utilisé pour traiter le paquet de flux de données de liaison descendante, le module de ressources utilisé pour traiter le paquet de flux de données de liaison descendante étant le même que le module de ressources utilisé pour traiter le paquet de flux de données de liaison montante.

5. Procédé selon la revendication 4, dans lequel la détermination, en fonction de l'identifiant du module de ressources, d'un module de ressources utilisé pour traiter le paquet de flux de données de liaison descendante comprend :
la détermination, en fonction du paquet de flux de données de liaison descendante reçu, de l'adresse de destination pour le traitement du paquet de flux de données de liaison descendante ; et
la détermination, en fonction de l'adresse de destination et de l'identifiant du module de ressources utilisé pour traiter le paquet de flux de données de liaison montante, du module de ressources utilisé pour traiter le paquet de flux de données de liaison descendante.

6. Procédé selon la revendication 5, dans lequel, avant de déterminer, en fonction de l'identifiant du module de ressources utilisé pour traiter le paquet de flux de données de liaison montante, un module de ressources utilisé pour traiter le paquet de flux de données de liaison descendante, le procédé comprend également :
l'ajout, à un en-tête de routage de segment ESR du paquet de flux de données de liaison descendante, de la correspondance entre l'identifiant du module de ressources utilisé pour traiter le paquet de flux de données de liaison montante et le SF.

7. Appareil de traitement d'un flux de données, comprenant une unité de traitement et une unité de communication, dans lequel l'unité de communication est configurée pour recevoir un paquet de flux de données de liaison montante ;
l'unité de traitement est configurée pour : déterminer un module de ressources parmi plusieurs modules de ressources d'une même fonction de service, FS, utilisé pour traiter le paquet de flux de données de liaison montante et un identifiant du module de ressources utilisé pour traiter le paquet de flux de données de liaison montante ; et modifier le paquet de flux de données de liaison montante en fonction de l'identifiant du module de ressources, un paquet de flux de données de liaison montante modifié comprenant l'identifiant du module de ressources utilisé pour traiter le paquet de flux de données de liaison montante ; et l'unité de communication est également configurée pour envoyer le paquet de flux de données de liaison montante modifié ;
dans lequel l'unité de traitement est spécifiquement configurée pour :
déterminer, en fonction du paquet de flux de données de liaison montante reçu, une adresse de destination pour le traitement du paquet de flux de données de liaison montante ; et
déterminer, à partir de modules de ressources correspondant à l'adresse de destination, le module de ressources utilisé pour traiter le paquet de flux de données de liaison montante et l'identifiant du module de ressources utilisé pour traiter le paquet de flux de données de liaison montante ;
dans lequel l'unité de traitement est spécifiquement configurée pour :
déterminer une entrée de transfert en fonction de l'adresse de destination, l'entrée de transfert comprenant les modules de ressources correspondant à l'adresse de destination et les identifiants des modules de ressources correspondant à l'adresse de destination ; et
obtenir, à partir de l'entrée de transfert, le module de ressources utilisé pour traiter le paquet de flux de données de liaison montante et l'identifiant du module de ressources utilisé pour traiter le paquet de flux de données de liaison montante ;
dans lequel l'unité de traitement est également configurée pour :
recevoir un paquet de protocole, dans lequel le paquet de protocole transporte l'adresse de destination et les modules de ressources correspondant à l'adresse de destination ; et
générer l'entrée de transfert en fonction du paquet de protocole.
